# EUROPEAN PATENT SPECIFICATION

(11) **EP 3 934 066 B1**
(45) Date of publication and mention of the grant of the patent: **05.04.2023**
(21) Application number: 21765540.6
(22) Date of filing: 18.01.2021
(51) Int. Cl.: H02K 1/32, H02K 9/19, H02K 1/26, H02K 3/24, H02K 11/042

(54) **ROTOR, MOTOR, POWER ASSEMBLY, AND VEHICLE**
ROTOR, MOTOR, ANTRIEBSAGGREGAT UND FAHRZEUG
ROTOR, MOTEUR, ENSEMBLE DE PUISSANCE ET VÉHICULE

(30) Priority: 18.05.2020 CN 202010419588
(43) Date of publication of application: 05.01.2022
(73) Proprietor: Huawei Digital Power Technologies Co., Ltd., Shenzhen, 518043 (CN)
(72) Inventor: HUANG, Jianxin, Shenzhen, Guangdong 518129 (CN); CHEN, Jinhua, Shenzhen, Guangdong 518129 (CN); ZHOU, Zhao, Shenzhen, Guangdong 518129 (CN); WU, Chaoqiang, Shenzhen, Guangdong 518129 (CN); WANG, Shaohua, Shenzhen, Guangdong 518129 (CN)
(74) Representative: Pfenning, Meinig & Partner mbB
(86) International application number: PCT/CN2021/072425
(87) International publication number: WO 2021/232833

(56) References cited:
- EP-A1- 3 509 193
- CN-A- 104 704 723
- CN-A- 109 891 711
- CN-A- 111 769 674
- CN-U- 206 313 565
- DE-A1-102011 117 517
- DE-A1-102016 215 428
- FR-A1- 2 944 655
- US-A1- 2003 193 256
- US-A1- 2013 313 928
- US-A1- 2016 043 613
- US-B2- 6 727 609
- US-B2- 8 729 752
- US-B2- 10 461 595

## Description

### TECHNICAL FIELD

This application relates to the field of motor technologies, and in particular, to a rotor, a motor, a powertrain, and a vehicle.

### BACKGROUND

A motor is an electromagnetic apparatus that implements electric energy conversion or transfer according to the law of electromagnetic induction, and a main function of the motor is to generate drive torque as a power source of an electric appliance or various machines. With miniaturization of a motor in a powertrain, power density of the motor gradually increases. As the power density of the motor increases, how to improve heat dissipation efficiency of the motor becomes an urgent technical problem to be resolved.

The motor mainly includes a housing and a front cover and a rear cover that are located at both ends of the housing, a sealed cavity is enclosed by the front cover, the rear cover, and an inner wall of the housing together, and a stator, a rotor, a rotation shaft, and a coil are disposed in the cavity. One end of the rotation shaft protrudes from the housing from the front cover, the other end of the rotation shaft is rotatably connected to the rear cover, the rotor is sleeved on the rotation shaft, the stator is sleeved on outer circumference of the rotor, the rotor includes a rotor iron core and a coil wound around the rotor iron core, and the stator includes a stator iron core and a coil wound around the stator iron core. When the motor is operating, the rotor, the winding coil of the rotor, the stator, and the winding coil of the stator all generate much heat. Therefore, a stator cooling oil channel is usually disposed between the stator and the housing, a rotor cooling oil channel is distributed in an axis direction of the rotation shaft, there are oil outlets at both ends of the stator cooling oil channel, and cooling oil is sprayed from the oil outlet to an end of the winding coil of the stator. The rotor cooling oil channel also has an oil outlet close to an end of the winding coil of the stator, and after cooling the rotor, the cooling oil in the rotor cooling oil channel is sprayed from the oil outlet to the end of the winding coil of the stator to dissipate heat of the winding coil of the stator.

However, in the foregoing cooling manner of the motor, cooling of the rotor is mainly implemented by the cooling oil channel in the rotation shaft, and the winding coil of the rotor needs to be cooled through heat conduction of the rotation shaft and the iron core. Therefore, a heat dissipation requirement of the winding coil of the rotor cannot be met, and a heat dissipation effect of the rotor is relatively poor.

US 2016/043613 A1 discloses that a wedge for an electrical machine core includes a hollow wedge body including a wedge wall extending in an axial direction. The wedge wall separates an interior hollow space of the wedge body from a space exterior to the wedge body. A phase change material can be housed within the interior hollow space of the wedge for regulating heat transfer through the wedge.

DE 10 2016 215428 A1 discloses an electrical rotary machine with a rotor, a stator and a shaft, the rotor being fastened to the shaft which is designed as a hollow shaft with a first coolant channel for a liquid coolant extending in the axial direction, with a second coolant channel is provided, which is connected to the first coolant channel in a coolant-carrying manner and which extends through the rotor in the axial direction.

US 10 461 595 B2 discloses a rotor assembly for an electric machine includes a core having at least one post and a cap wherein electrical windings are wound about the rotor assembly to define a pole.

US 8729752 B2 discloses a wedge cooling apparatus and method for cooling a rotating machine, such as a generator, disperses a spray of cooling fluid into the wedges of the generator via a pipe that runs along the length of each of the wedges.

US 2013/313928 A1 discloses an electric motor includes a rotor and a shaft coupled to the rotor. The rotor has at least one radially oriented cavity and at least one fluid channel. The fluid channel extends in a generally axial direction. The fluid channel is fluidly connected to the at least one radially oriented cavity. The shaft has a fluid passageway therein.

US 2003/193256 A1 discloses an arrangement for cooling a rotor of a motor, generator or alternator wherein at least one cold plate element is disposed between a rotor pole and its associated winding.

EP 3509193 A1 discloses a wedge for use between poles of a generator for supporting windings of the poles includes a plurality of outer walls. The wedge also includes at least one fluid orifice extending through at least one of the plurality of outer walls and configured to receive a fluid from a shaft of the generator.

### SUMMARY

The present invention is set out in the appended set of claims. Embodiments of this application provide a rotor, a motor, a powertrain, and a vehicle, to resolve a problem that a cooling manner of an existing motor cannot meet a heat dissipation requirement of a rotor winding, and therefore a dissipation effect of a rotor is relatively poor.

A first aspect of the embodiments of this application provides a rotor, including a rotation shaft, a rotor iron core, and a plurality of rotor windings, where the rotor iron core is sleeved on the rotation shaft, the rotor winding is wound around the rotor iron core, and the plurality of rotor windings are spaced apart in a circumferential direction of the rotor iron core;
the rotation shaft has a first flow channel distributed in an axial direction, the rotation shaft has a first through hole, and the first through hole is connected to the first flow channel; and
the rotor iron core has a second flow channel, both ends of the second flow channel extend to both ends of the rotor iron core, the second flow channel includes a first inlet end, a first axial flow channel, and a first outlet end that are connected to each other, the first inlet end is connected to the first through hole, and the first axial flow channel is located between two adjacent rotor windings. In this way, a cooling medium in the first flow channel sequentially passes through the first through hole and the first inlet end, then flows into the first axial flow channel, and flows out of the rotor from the first outlet end, and because the first axial flow channel is located between two adjacent rotor windings, in other words, the first axial flow channel is relatively close to the rotor winding, the cooling medium flowing through the first axial flow channel can dissipate heat of the rotor winding more directly, which can better implement heat dissipation of the rotor winding, effectively improve a heat dissipation effect of the rotor winding, and further improve a heat dissipation effect of the rotor compared with heat dissipation performed through heat conduction of the rotation shaft and the rotor iron core. The first axial flow channel is located between two adjacent rotor windings. Specifically, a quantity of first axial flow channels may be equal to a quantity of rotor windings, in other words, the first axial flow channel is disposed between every two adjacent rotor windings. Alternatively, a quantity of first axial flow channels is less than a quantity of rotor windings, in other words, the first axial flow channel is disposed between two of some adjacent rotor windings.

In a possible implementation of the first aspect, the rotation shaft further has a second through hole, the first through hole is adjacent to one end of the rotor iron core, the second through hole is adjacent to the other end of the rotor iron core, and the second through hole is connected to the first flow channel; and
the rotor iron core further has a third flow channel, both ends of the third flow channel extend to both ends of the rotor iron core, the third flow channel includes a second inlet end, a second axial flow channel, and a second outlet end that are connected to each other, the second inlet end is connected to the second through hole, and the second axial flow channel is located between two adjacent rotor windings. In this way, a cooling medium in the second flow channel sequentially passes through the second through hole and the second inlet end, then flows into the second axial flow channel, and flows out of the rotor from the second outlet end. Heat dissipation of the rotor winding is jointly implemented by using the second flow channel and the third flow channel, so that a heat dissipation effect of the rotor winding is effectively improved. The second axial flow channel is located between two adjacent rotor windings. Specifically, the second axial flow channel is disposed between two of some adjacent rotor windings.

In a possible implementation of the first aspect, the rotation shaft further has a second through hole, the first through hole is adjacent to one end of the rotor iron core, the second through hole is adjacent to the other end of the rotor iron core, and the second through hole is connected to the first flow channel; and
the rotor iron core further has a fourth flow channel distributed in the axial direction, the fourth flow channel is located between the rotor winding and the rotation shaft, and the fourth flow channel is connected to the second through hole. In this way, the cooling medium in the first flow channel passes through the second through hole, flows into the fourth flow channel, and flows out of the rotor from an outlet end of the fourth flow channel. Heat dissipation of the rotor iron core and the rotor winding is jointly implemented by using the second flow channel disposed in a gap between two rotor windings and the fourth flow channel disposed in the rotor iron core, so that a heat dissipation effect of the rotor winding is further improved. In addition, the fourth flow channel helps improve a heat dissipation effect of the rotor iron core, so that an overall heat dissipation effect of the rotor is effectively improved.

In a possible implementation of the first aspect, the rotor iron core further has a fourth flow channel distributed in the axial direction, and the fourth flow channel is located between the rotor winding and the rotation shaft; and
one end of the fourth flow channel is connected to the first through hole, and the other end of the fourth flow channel is connected to the first inlet end. In this way, the cooling medium in the first flow channel sequentially passes through the first through hole, the fourth flow channel, and the first inlet end, then flows into the first axial flow channel, and flows out of the rotor from the first outlet end. Heat dissipation of the rotor iron core and the rotor winding is jointly implemented by using the second flow channel in a gap between rotor windings and the fourth flow channel in the rotor iron core, so that a heat dissipation effect of the rotor winding is further improved, and a heat dissipation effect of the rotor is also effectively improved.

In a possible implementation of the first aspect, the rotor iron core further has a fourth flow channel and a fifth flow channel distributed in the axial direction, and the fourth flow channel and the fifth flow channel are separately located between the rotor winding and the rotation shaft;
one end of the fourth flow channel is connected to the first through hole, and the other end of the fourth flow channel is connected to the first inlet end; and
one end of the fifth flow channel is connected to the second through hole, and the other end of the fifth flow channel is connected to the second inlet end.

One part of the cooling medium in the first flow channel passes through the first through hole, the fourth flow channel, and the first inlet end, and then flows into the first axial flow channel, and the other part passes through the second through hole, the fifth flow channel, and the second inlet end, then flows into the second axial flow channel, and flows out of the rotor from the second outlet end. In this way, heat dissipation of the rotor winding is jointly implemented by using the first axial flow channel and the second axial flow channel that are disposed in gaps between rotor windings, so that a heat dissipation effect of the rotor winding is effectively improved. In addition, heat dissipation of the rotor iron core and the rotor winding is jointly implemented by using the second flow channel and the third flow channel that are disposed in gaps between rotor windings and the fourth flow channel and the fifth flow channel that are disposed in the rotor iron core, so that a heat dissipation effect of the rotor winding is further improved, and a heat dissipation effect of the rotor is improved.

In a possible implementation of the first aspect, the rotor further includes a first shaft sleeve sleeved on the rotation shaft, where the first shaft sleeve is located on one side of the rotor iron core, and the first shaft sleeve is adjacent to the first through hole; and
the first shaft sleeve has a first groove, one end of the first groove is connected to the first through hole, and the other end of the first groove is connected to the first inlet end. In this way, the cooling medium in the first flow channel enters the first groove through the first through hole, enters the first inlet end from the first groove, and then flows into the first axial flow channel to dissipate heat of the rotor winding.

In a possible implementation of the first aspect, the rotor further includes an end plate and an excitation module, where the end plate is located on one side of the rotor iron core, the end plate is adjacent to the first inlet end, and the excitation module is disposed on the end plate; and
the end plate has a plurality of third grooves, the plurality of third grooves are distributed in the circumferential direction of the rotor iron core, the first inlet end includes a first radial flow channel distributed in a radial direction of the rotor iron core, the first radial flow channel is connected to the first axial flow channel, and the third groove covers a part of the first radial flow channel. A backflow channel is formed by a part of overlapping between the third groove and the first radial flow channel. A cooling medium that enters the first radial flow channel from the first inlet end can enter the third groove on the end plate through the backflow channel. In other words, when the rotor rotates, the cooling medium is filled in the third groove on the end plate under centrifugal action to dissipate heat of the excitation module disposed on a surface that is of the end plate and that is away from the rotor iron core, so that a heat dissipation effect of the excitation module is improved, and a heat dissipation problem of the excitation module is resolved.

In a possible implementation of the first aspect, the rotor further includes an end plate and an excitation module, where the end plate is located on one side of the rotor iron core, the end plate is adjacent to the first inlet end, and the excitation module is disposed on the end plate;
the end plate has a plurality of third grooves, the plurality of third grooves are distributed in the circumferential direction of the rotor iron core, the first inlet end includes a first radial flow channel distributed in a radial direction of the rotor iron core, the first radial flow channel is connected to the first axial flow channel, and the third groove covers a part of the first radial flow channel; and
the end plate further has a plurality of fourth grooves connected to the third grooves, an outlet flow channel is formed by the fourth groove and an end of the rotor iron core, and the outlet flow channel has an outlet. A backflow channel is formed by a part of overlapping between the third groove and the first radial flow channel, the backflow channel is connected to the outlet flow channel, and a cooling medium in the backflow channel flows out of the rotor through the outlet of the outlet flow channel. When entering the outlet flow channel through the backflow channel and flowing out, the cooling medium can exchange heat with the excitation module on the end plate, so that heat dissipation of the excitation module is further strengthened, and a heat dissipation effect of the excitation module is improved.

In a possible implementation of the first aspect, the rotor further includes an end plate and an excitation module, where the end plate is located on one side of the rotor iron core, the end plate is adjacent to the first inlet end, and the excitation module is disposed on the end plate; and
the end plate further has a plurality of fourth grooves, an outlet flow channel is formed by the fourth groove and an end of the rotor iron core, the outlet flow channel is connected to the second outlet end, and the outlet flow channel has an outlet. In this way, a cooling medium in the third flow channel flows through the second axial flow channel, then flows into the outlet flow channel through the second outlet end, and flows out of the rotor from the outlet of the outlet flow channel.

In a possible implementation of the first aspect, the rotor further includes a first shaft sleeve sleeved on the rotation shaft, where the first shaft sleeve is located on one side of the rotor iron core, and the first shaft sleeve is adjacent to the first through hole; and
the first shaft sleeve has a second groove, the second groove is distributed in a circumferential direction of the first shaft sleeve, a third through hole disposed in an axial direction of the first shaft sleeve is cut in the second groove, a centralization flow channel is formed by the second groove and an end of the rotor iron core, and the centralization flow channel is connected to the fourth flow channel. In this way, a cooling medium in the fourth flow channel can flow into the centralization flow channel, and flow out of the rotor iron core through the third through hole.

In a possible implementation of the first aspect, the rotor further includes an end plate and an excitation module, where the end plate is located on one side of the rotor iron core, the end plate is adjacent to the first inlet end, and the excitation module is disposed on the end plate; and
the end plate has a plurality of fourth grooves, an outlet flow channel is formed by the fourth groove and an end of the rotor iron core, the outlet flow channel is connected to the third through hole, and the outlet flow channel has an outlet. In this way, a cooling medium in the fourth flow channel flows into the centralization flow channel, and then flows into the outlet flow channel through the third through hole. After exchanging heat with the excitation module on the end plate, the cooling medium in the outlet flow channel flows out of the rotor from the outlet of the outlet flow channel. In other words, the cooling medium in the fourth flow channel passes through the centralization flow channel, the third through hole, and the outlet flow channel, and then flows out of the rotor through the outlet of the outlet flow channel, so that a heat dissipation effect of the excitation module is further improved.

In a possible implementation of the first aspect, the rotor further includes a first shaft sleeve sleeved on the rotation shaft, where the first shaft sleeve is located on one side of the rotor iron core, and the first shaft sleeve is adjacent to an outlet end of the fourth flow channel; and
the first shaft sleeve has a second groove, the second groove is distributed in a circumferential direction of the first shaft sleeve, a third through hole disposed in an axial direction of the first shaft sleeve is cut in the second groove, a centralization flow channel is formed by the second groove and an end of the rotor iron core, the centralization flow channel is connected to the fourth flow channel, and the centralization flow channel is connected to the first inlet end by using the third through hole. In this way, a cooling medium in the fourth flow channel can flow into the centralization flow channel, then flow into the first inlet end through the third through hole, and then flow into the first axial flow channel to dissipate heat of the rotor winding.

In a possible implementation of the first aspect, the rotor further includes an end plate and an excitation module, where the end plate is located on one side of the rotor iron core, the end plate is adjacent to the first outlet end, and the excitation module is disposed on the end plate; and
the end plate has a plurality of fourth grooves, an outlet flow channel is formed by the fourth groove and an end of the rotor iron core, the outlet flow channel is connected to the first outlet end, and the outlet flow channel has an outlet. In this way, a cooling medium in the second flow channel can flow into the outlet flow channel through the first outlet end, and flow out of the rotor from the outlet of the outlet flow channel.

In a possible implementation of the first aspect, the rotor further includes a first shaft sleeve sleeved on the rotation shaft, where the first shaft sleeve is located on one side of the rotor iron core, and the first shaft sleeve is adjacent to an outlet end of the fifth flow channel; and
the first shaft sleeve has a second groove, the second groove is distributed in a circumferential direction of the first shaft sleeve, a third through hole disposed in an axial direction of the first shaft sleeve is cut in the second groove, a centralization flow channel is formed by the second groove and an end of the rotor iron core, the centralization flow channel is connected to the fifth flow channel, and the centralization flow channel is connected to the second inlet end by using the third through hole. In this way, a cooling medium in the fifth flow channel can flow into the centralization flow channel, then flow into the second inlet end through the third through hole, and then flow into the second axial flow channel to dissipate heat of the rotor winding.

In a possible implementation of the first aspect, the rotor further includes an end plate and an excitation module, where the end plate is located on one side of the rotor iron core, the end plate is adjacent to the second inlet end, and the excitation module is disposed on the end plate; and
the end plate has a plurality of third grooves, the plurality of third grooves are distributed in the circumferential direction of the rotor iron core, the second inlet end includes a second radial flow channel distributed in a radial direction of the rotor iron core, the second radial flow channel is connected to the second axial flow channel, and the third groove covers a part of the second radial flow channel. In this way, a cooling medium that enters the second radial flow channel can enter and is filled in the third groove on the end plate through a backflow channel to dissipate heat of the excitation module disposed on the end plate, so that a heat dissipation effect of the excitation module is improved, and a heat dissipation problem of the excitation module is resolved.

In a possible implementation of the first aspect, the end plate further has a plurality of fourth grooves, an outlet flow channel is formed by the fourth groove and an end of the rotor iron core, the outlet flow channel is connected to the first outlet end, and the outlet flow channel has an outlet. In this way, the cooling medium in the second flow channel flows through the first axial flow channel, then flows into the outlet flow channel through the first outlet end, and flows out of the rotor from the outlet of the outlet flow channel.

In a possible implementation of the first aspect, the fourth groove includes a plurality of connected arc-shaped grooves, the plurality of arc-shaped grooves are disposed in the radial direction of the rotor iron core, and there are protrusions on walls of some arc-shaped grooves toward the inside or the outside of the grooves. The arc-shaped groove helps reduce a flow speed of a cooling medium in the fourth groove. In addition, disposing the protrusion also impedes flow of the cooling medium to some extent, so that the cooling medium can stay in the outlet flow channel for a relatively long time, thereby improving a heat dissipation effect of the excitation module disposed on the end plate.

In a possible implementation of the first aspect, a radial spacing of the first outlet end is less than a radial spacing of the first axial flow channel. In this way, flow of the cooling medium is impeded, and a flow direction of the cooling medium is changed, so that the cooling medium can flow closer to a side that is of the second flow channel and that is close to the rotation shaft, thereby increasing a contact area between the cooling medium and the rotor iron core and the rotor winding and a contact time of a cooling medium in a unit volume and the rotor iron core and the rotor winding and further improving a heat dissipation effect of the rotor.

In a possible implementation of the first aspect, the first inlet end includes an equalization flow channel and a first radial flow channel, the equalization flow channel is distributed in the circumferential direction of the rotor iron core, the first radial flow channel is distributed in the circumferential direction of the rotor iron core, the first through hole is connected to the equalization flow channel, the equalization flow channel is connected to the first radial flow channel, and the first radial flow channel is connected to the first axial flow channel. In this way, the cooling medium in the first flow channel enters a connection flow channel through the first through hole, then flows through the equalization flow channel and the first radial flow channel, and then flows into the first axial flow channel to dissipate heat of the rotor winding.

In a possible implementation of the first aspect, a radial spacing of the second outlet end is less than a radial spacing of the second axial flow channel. In this way, flow of the cooling medium is impeded, and a flow direction of the cooling medium is changed, so that the cooling medium can flow closer to a side close to the rotation shaft instead of flowing out close to a side away from the rotation shaft under centrifugal action, thereby increasing a cooling area between the cooling medium and the rotor iron core and the rotor winding and a cooling time of the cooling medium and further improving a heat dissipation effect of the rotor. In addition, more cooling media can also be filled in the outlet flow channel and stay in the outlet flow channel for a relatively long time, so that a cooling area between the cooling medium and the excitation module on the end plate and a cooling time of the cooling medium are increased, and a heat dissipation effect of the excitation module is improved.

In a possible implementation of the first aspect, the rotor further includes a second shaft sleeve disposed on the rotation shaft, where the second shaft sleeve is adjacent to the second through hole, the second shaft sleeve has a circumferential flow channel distributed in a circumferential direction, the second through hole is connected to the circumferential flow channel, and the circumferential flow channel is connected to the fourth flow channel. In this way, the second through hole is connected to the fourth flow channel by using the circumferential flow channel, so that the cooling medium in the first flow channel enters the circumferential flow channel after passing through the second through hole, and then enters the fourth flow channel.

A second aspect of the embodiments of this application provides a motor, including at least a stator and any one of the foregoing rotors, where the stator is sleeved on outer circumference of the rotor, the stator includes a stator iron core and a stator winding wound around the stator iron core, and a first outlet end of the rotor is adjacent to one end of the stator winding. Through inclusion of any one of the foregoing rotors whose rotor iron core has a first axial flow channel disposed in a gap between two adjacent rotor windings, heat dissipation of the rotor winding is implemented by using the first axial flow channel relatively close to the rotor winding, so that a heat dissipation effect of the rotor winding is improved, the rotor has a relatively high heat dissipation effect, and an overall heat dissipation effect of the motor is further improved.

In a possible implementation of the second aspect, the apparatus further includes a flow distribution apparatus, and the flow distribution apparatus is configured to spray a cooling medium onto both ends of the stator winding. In this way, an amount of cooling medium flowing to an end of the stator winding can be ensured, and a heat dissipation effect of the stator winding can be ensured.

A third aspect of the embodiments of this application provides a powertrain, including at least the foregoing motor. In a rotor of the motor, heat dissipation of a rotor winding is implemented by disposing a first axial flow channel relatively close to the rotor winding, so that a heat dissipation effect of the rotor winding is improved, the motor has a relatively high heat dissipation effect, a heat dissipation effect of a powertrain system is further improved, and heat in the powertrain can be effectively dissipated in a timely manner.

A fourth aspect of the embodiments of this application provides a vehicle, including at least the foregoing motor. In a rotor of the motor, heat dissipation of a rotor winding is implemented by disposing a first axial flow channel relatively close to the rotor winding, so that a heat dissipation effect of the rotor winding is improved, and the motor has a relatively high heat dissipation effect, thereby increasing movement efficiency of the vehicle and extending a service life of the vehicle.

### BRIEF DESCRIPTION OF DRAWINGS

FIG. 1 is a schematic diagram of a cross-sectional structure of a rotor and a cooling medium flow path according to an embodiment of this application;
FIG. 2 is a schematic structural diagram of a first shaft sleeve in a rotor according to an embodiment of this application;
FIG. 3 is a schematic cross-sectional diagram of a rotor along a line B-B₁ in FIG. 1 according to an embodiment of this application;
FIG. 4 is a schematic cross-sectional diagram of a rotor along a line A-A₁ in FIG. 1 according to an embodiment of this application;
FIG. 5 is a schematic cross-sectional diagram of a rotor along a line C-C₁ in FIG. 1 according to an embodiment of this application;
FIG. 6 is a schematic cross-sectional view of a second flow channel in a rotor according to an embodiment of this application;
FIG. 7 is a schematic diagram of a cross-sectional structure of a rotor and a cooling medium flow path according to an embodiment of this application;
FIG. 8 is a schematic cross-sectional view of a third flow channel in a rotor according to an embodiment of this application;
FIG. 9 is a schematic cross-sectional diagram of a rotor along a line B-B₁ in FIG. 7 according to an embodiment of this application;
FIG. 10 is a schematic diagram of a cross-sectional structure of a rotor and a cooling medium flow path according to an embodiment of this application;
FIG. 11 is a schematic structural diagram of a first shaft sleeve in a rotor according to an embodiment of this application;
FIG. 12 is a schematic cross-sectional diagram of a rotor along a line B-B₁ in FIG. 10 according to an embodiment of this application;
FIG. 13 is a schematic cross-sectional diagram of a rotor along a line C-C₁ in FIG. 10 according to an embodiment of this application;
FIG. 14 is a locally enlarged schematic cross-sectional diagram of a second through hole in a rotor according to an embodiment of this application;
FIG. 15 is a schematic diagram of a cross-sectional structure of a rotor and a cooling medium flow path according to an embodiment of this application;
FIG. 16 is a schematic structural diagram of a first shaft sleeve in a rotor according to an embodiment of this application;
FIG. 17 is a schematic diagram of a cross-sectional structure of a rotor and a cooling medium flow path according to an embodiment of this application;
FIG. 18 is a schematic cross-sectional diagram of a rotor along a line B-B₁ in FIG. 17 according to an embodiment of this application;
FIG. 19 is a schematic cross-sectional view of a second flow channel in a rotor according to an embodiment of this application;
FIG. 20 is a schematic diagram of a cross-sectional structure of a rotor and a cooling medium flow path according to an embodiment of this application;
FIG. 21 is a schematic cross-sectional view of a second flow channel in a rotor according to an embodiment of this application; and
FIG. 22 is a schematic cross-sectional view of a third flow channel in a rotor according to an embodiment of this application.

### Description of reference signs:

100-Rotor; 11-Rotation shaft; 111-First through hole; 112-Second through hole; 12-Rotor iron core; 121-Rotor slot; 122-Gap; 123-Sealing part; 13-Rotor winding; 14-First flow channel; 15-Second flow channel; 151-First inlet end; 151a-Equalization flow channel; 151b-First radial flow channel; 152-First axial flow channel; 153-First outlet end; 16-Third flow channel; 161-Second inlet end; 161a-Second radial flow channel; 162-Second axial flow channel; 163-Second outlet end; 17-Fourth flow channel; 18-Fifth flow channel; 19-First shaft sleeve; 191-First groove; 192-Second groove; 193-Third through hole; 101-End plate; 102-Excitation module; 114-Third groove; 113-Fourth groove; 113a-Arc-shaped groove; 113b-Protrusion; 113c-Opening; 103-Second shaft sleeve; 104-Circumferential flow channel; 105-Excitation current receiving structure.

### DESCRIPTION OF EMBODIMENTS

The terms used in the implementations of this application are merely used to explain the specific embodiments of this application, but are not intended to limit this application. The following describes the implementations of the embodiments of this application in detail with reference to the accompanying drawings.

Currently, as an environmentally-friendly and energy-saving transportation tool, electric vehicles are more widely applied. Motors of the electric vehicles are mainly permanent magnet synchronous motors, excitation motors, asynchronous induction motors, and the like. The excitation motors are widely applied to the industrial field because efficiency of the excitation motors is higher than that of the asynchronous motors and is close to that of the permanent magnet synchronous motors and costs of the excitation motors are lower than those of the permanent magnet synchronous motors.

In daily driving, low-and-medium speed working conditions are relatively common. In this case, an in-vehicle powertrain needs to output relatively high torque, and therefore a relatively large current needs to be loaded onto the excitation motor to generate an excitation magnetic field. When the motor works, a rotor winding, a stator winding, and an excitation component generate much heat. In particular, the rotor winding generates a relatively large amount of heat, and an excitation component disposed close to a rotor also generates a relatively large amount of heat. Therefore, how to effectively improve a heat dissipation effect of the rotor becomes an urgent problem to be resolved.

Heat dissipation of a motor is usually performed in a water cooling or oil cooling manner. If water is used as a cooling medium, there are problems such as low power density of a water-cooled motor, a large thermal resistance of a link, a high thermal resistance ratio of an interface, a need for glue dispensing at an end of a coil, and no mass production of high-speed oil seals. Therefore, oil cooling is more widely used. As described in the background, a common oil cooling manner of an existing motor is as follows: A stator cooling oil channel is disposed between a stator and a housing, there are oil outlets at both ends of the stator cooling oil channel, and cooling oil in the stator cooling oil channel is sprayed from the oil outlet to an end of a winding coil of the stator to dissipate heat of a stator winding. A rotor cooling oil channel is distributed in an axis direction of a rotation shaft, there are also oil outlets at both ends of the rotor cooling oil channel, and after cooling a rotor, cooling oil in the rotor cooling oil channel is sprayed from the oil outlet to an end of the stator winding to further dissipate heat of the stator winding. The cooling oil in the rotor cooling oil channel dissipates heat of a rotor winding through heat conduction of the rotation shaft and a rotor iron core, which causes a relatively poor heat dissipation effect of the rotor winding, cannot meet a heat dissipation requirement of the rotor winding, and reduces a heat dissipation effect of the rotor.

To resolve the foregoing technical problems, an embodiment of this application provides a rotor. The rotor may be applied to a motor. Specifically, the motor may be an excitation motor, or may be another motor that has a rotor.

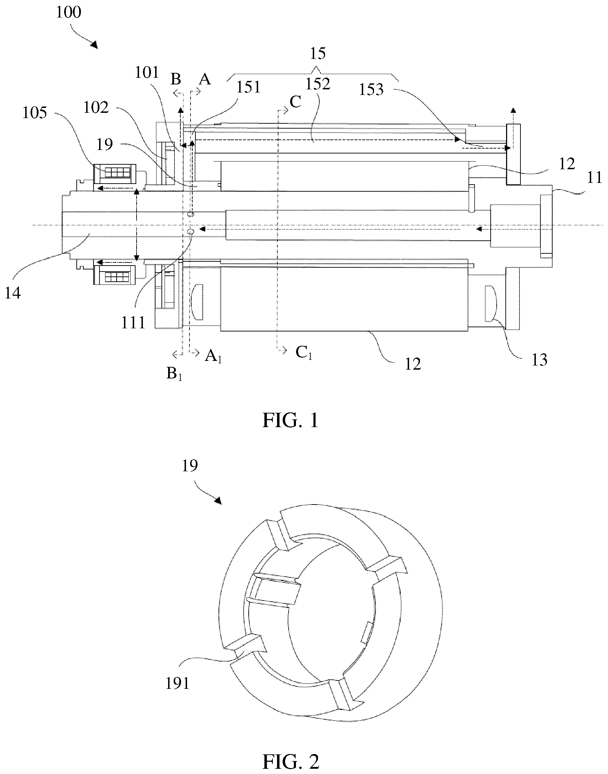

As shown in FIG. 1, the rotor 100 includes a rotation shaft 11, a rotor iron core 12, and a plurality of rotor windings 13. The rotation shaft 11 and the rotor iron core 12 can be cylindrical, have axes and circumferential surfaces, and the axes of the rotation shaft 11 and the rotor iron core 12 coincide. In this embodiment of this application, an axial direction is a direction parallel to an axis. The rotor iron core 12 has a shaft hole extending in an axial direction. The rotor iron core 12 is sleeved on the rotation shaft 11 by using the shaft hole, and is fixedly connected to the rotation shaft 11, so that the rotation shaft 11 rotates with the rotor iron core 12.

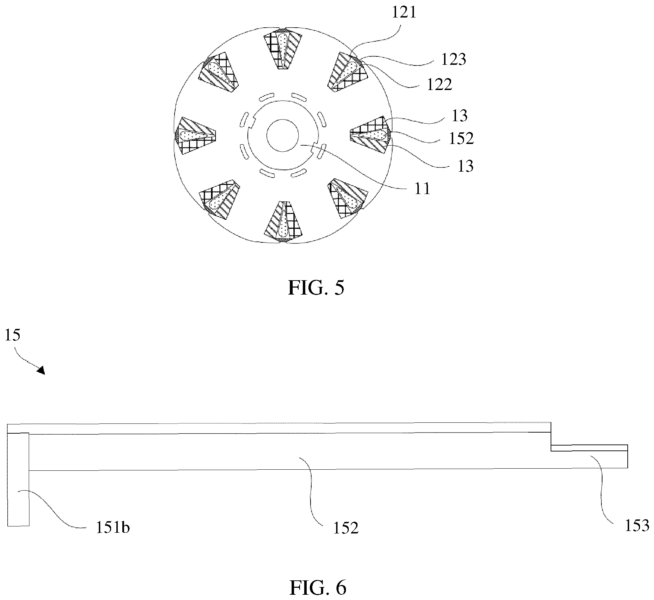

As shown in FIG. 5, the rotor iron core 12 has a plurality of rotor slots 121 disposed in the axial direction, the plurality of rotor slots 121 are spaced apart in a circumferential direction of the rotor iron core 12, and a winding coil is wound in two adjacent rotor slots 121, in other words, the rotor winding 13 is wound around the rotor iron core 12 by using the rotor slot 121. The plurality of rotor windings 13 are distributed in the circumferential direction of the rotor iron core 12, there is a gap 122 between two adjacent rotor windings 13, and both ends of the rotor winding 13 are located at both ends of the rotor iron core 12 and are located outside the rotor slot 121. The following describes in detail a cooling manner of the rotor by using different embodiments.

### Embodiment 1

In this embodiment of this application, as shown in FIG. 1, the rotation shaft 11 has a first flow channel 14 distributed in the axial direction. Specifically, the rotation shaft 11 may have a cavity extending along the axis, the cavity forms the first flow channel 14 to provide flow space for a cooling medium, and the cooling medium may flow into and pass through the first flow channel 14 to exchange heat with the rotation shaft 11, the rotor iron core 12, and the rotor winding 13, to dissipate heat of the rotor 100. The rotation shaft 11 has a first through hole 111. Specifically, the first through hole 111 may be adjacent to one of both ends of the rotor iron core 12, the first through hole 111 is connected to the first flow channel 14, and the cooling medium in the first flow channel 14 may flow out of the rotation shaft 11 through the first through hole 111.

As shown in FIG. 1 and FIG. 5, the rotor iron core 12 has a second flow channel 15, and both ends of the second flow channel 15 extend to both ends of the rotor iron core 12. As shown in FIG. 1 and FIG. 6, the second flow channel 15 includes a first inlet end 151, a first axial flow channel 152, and a first outlet end 153 that are connected to each other, and the first inlet end 151 is connected to the first through hole 111, in other words, the first through hole 111 is connected to one end of the first inlet end 151, the other end of the first inlet end 151 is connected to one end of the first axial flow channel 152, and the other end of the first axial flow channel 152 is connected to the first outlet end 153. The first axial flow channel 152 is located between two adjacent rotor windings 13, in other words, the first axial flow channel 152 is disposed in a gap 122 between the two adjacent rotor windings 13, and the cooling medium in the first flow channel 14 sequentially passes through the first through hole 111 and the first inlet end 151, and then flow into the first axial flow channel 152.

It should be noted that FIG. 1 shows a cross-sectional structure of the rotor and a cooling medium flow path. To better reflect a cooling path inside the rotor, in FIG. 1, a cross-sectional structure of an upper half portion of the rotation shaft and a cross-sectional structure of a lower half portion of the rotation shaft are schematic diagrams of cross-sectional structures formed by two planes with an angle.

The rotation shaft 11 may include a first end and a second end, the first end is an end adjacent to an inlet end of the first flow channel 14, and the second end is an end opposite to the first end. The first through hole 111 may be located at the first end of the rotation shaft 11, or the first through hole 111 may be located at the second end of the rotation shaft 11. Enabling the first through hole 111 to be located at the second end of the rotation haft 11 can ensure that the cooling medium has a relatively large cooling area and a relatively long cooling time in the first flow channel 14, so that a cooling effect of the rotor 100 is improved.

Specifically, as shown in FIG. 1, the first through hole 111 is located at the second end of the rotation shaft 11, and the cooling medium enters the first flow channel 14 from the inlet end of the first flow channel 14 and flows to the first through hole 111, and exchanges heat with the rotation shaft 11, the rotor iron core 12, and the rotor winding 13 to dissipate heat. Then the cooling medium flows out of the rotation shaft 11 through the first through hole 111 and flows into the first inlet end 151, and flows out from the first outlet end 153 after flowing through the first axial flow channel 152. As shown in FIG. 5, the first axial flow channel 152 is located in a gap 122 between at least two adjacent rotor windings 13, in other words, the first axial flow channel 152 is relatively close to the rotor winding 13. In this way, the cooling medium flowing through the first axial flow channel 152 can dissipate heat of the rotor winding 13 more directly, which can better implement heat dissipation of the rotor winding 13, effectively improve a heat dissipation effect of the rotor winding 13, and further improve a heat dissipation effect of the rotor 100 compared with heat dissipation performed through heat conduction of the rotation shaft 11 and the rotor iron core 12.

In this embodiment of this application, the first axial flow channel 152 may be disposed between every two adjacent rotor windings 13, or the first axial flow channel 152 may be disposed between two of only some adjacent rotor windings 13. The first axial flow channel 152 may be formed in a gap 122 between two rotor windings 13 through glue dispensing. Specifically, a spacer (not shown in the figure) may be disposed in the gap 122, then glue is dispensed between the spacer and the rotor winding 13, and then the spacer is removed. In this way, a through groove with an opening is formed in the gap 122, and the opening of the through groove faces the outside of the rotor iron core. Then, the opening of the through groove is sealed by using a sealing part 123, so that a closed flow path is formed.

Alternatively, a mechanical part having the first axial flow channel 152 may be disposed in a gap 122 between two adjacent rotor windings 13. The mechanical part may be formed through injection molding, so that a closed cooling medium flow path is generated between the mechanical part and an equalization flow channel 151a.

The rotor iron core 12 may include a first end and a second end, the second end is an end adjacent to the inlet end of the first flow channel 14, and the first end is an end opposite to the second end. In other words, the first end of the rotor iron core 12 is adjacent to the second end of the rotation shaft 11, and the second end of the rotor iron core 12 is adjacent to the first end of the rotation shaft 11. The first inlet end 151 may be located at the first end of the rotor iron core 12, or the first inlet end 151 may be located at the second end of the rotor iron core 12. In this embodiment of this application, the first inlet end 151 is located at the first end of the rotor iron core 12, and the first outlet end 153 is located at the second end of the rotor iron core 12, to implement a connection between the first through hole 111 and the first inlet end 151.

The first outlet end 153 may be adjacent to one of ends of a stator winding of a stator in a motor. In this way, under action of a centrifugal force, a cooling medium flowing out from the first outlet end 153 can be swung to one of the ends of the stator winding to dissipate heat of the stator winding.

As shown in FIG. 1, the rotor 100 further includes a first shaft sleeve 19, the first shaft sleeve 19 is sleeved on the rotation shaft 11, the first shaft sleeve 19 is located on one side of the rotor iron core, and the first shaft sleeve 19 is adjacent to the first through hole 111. As shown in FIG. 1 and FIG. 2, the first shaft sleeve 19 has a first groove 191, one end of the first groove 191 is connected to the first through hole 111, and the other end of the first groove 191 is connected to the first inlet end 151, in other words, the first through hole 111 is connected to the first inlet end 151 by using the first groove 191. The cooling medium in the first flow channel 14 enters the first groove through the first through hole 111, enters the first inlet end 151 from the first groove, and then flows into the first axial flow channel 152 to dissipate heat of the rotor winding 13.

The first groove 191 may be located on a surface that is of the first shaft sleeve 19 and that is away from the rotor iron core 12, and a connection flow channel may be formed between the first groove 191 and an end surface of an end plate 101 located outside the first shaft sleeve 19. One end of the connection flow channel is connected to the first through hole, and the other end of the connection flow channel is connected to the first inlet end 151, so that the first through hole 111 is connected to the first inlet end 151 by using the first groove 191.

Alternatively, the first groove 191 may be located on a surface that is of the first shaft sleeve 19 and that is close to the rotor iron core 12, and a connection flow channel may be formed between the first groove 191 and an end surface of the rotor iron core 12. One end of the connection flow channel is connected to the first through hole, and the other end of the connection flow channel is connected to the first inlet end 151, so that the first through hole 111 is connected to the first inlet end 151 by using the first groove 191.

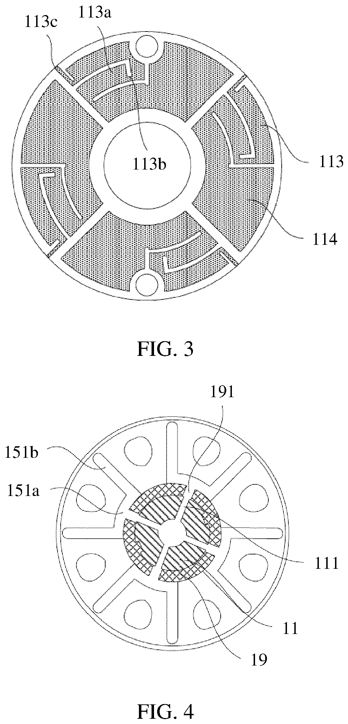

In this embodiment of this application, the rotor 100 further includes an end plate 101 and an excitation module 102. As shown in FIG. 1, the end plate 101 is located on one side of the rotor iron core 12, the end plate 101 is adjacent to the first inlet end 151, and the excitation module 102 is disposed on the end plate 101. Specifically, the excitation module 102 may be disposed on a surface that is of the end plate 101 and that is away from the rotor iron core 12. As shown in FIG. 1 and FIG. 3, the end plate 101 has a plurality of third grooves 114, the plurality of third grooves 114 are distributed in the circumferential direction of the rotor iron core 12, and the plurality of third grooves 114 may be located on a surface that is of the end plate 101 and that is close to the rotor iron core 12.

As shown in FIG. 1 and FIG. 6, the first inlet end 151 of the second flow channel 15 includes a first radial flow channel 151b distributed in a radial direction of the rotor iron core 12, and the first through hole 111 is connected to the first radial flow channel 151b. Specifically, the first radial flow channel 151b may be connected to the first through hole 111 by using the first groove 191, the first radial flow channel 151b is connected to the first axial flow channel 152, and the third groove 114 on the end plate 101 covers a part of the first radial flow channel 151b. A backflow channel may be formed by a part of overlapping between the third groove 114 and the first radial flow channel 151b. A cooling medium that enters the first radial flow channel 151b can enter the third groove 114 on the end plate 101 through the backflow channel. In other words, when the rotor 100 rotates, the cooling medium is filled in the third groove 114 on the end plate 101 under action of a centrifugal force to dissipate heat of the excitation module 102 disposed on the end plate 101, so that a heat dissipation effect of the excitation module 102 is improved, and a heat dissipation problem of the excitation module 102 is resolved.

The excitation module 102 is configured to rectify a current of the stator and transmit a rectified current to the rotor. The excitation module 102 may include heat emitting elements such as a diode and a capacitor. In this embodiment of this application, the rotor may further include an excitation current receiving structure 105, and the excitation current receiving structure 105 is configured to receive the current transmitted by the stator, and transmit the current to the excitation module 102. There may be a third through hole (not shown in the figure) at a position that is on the rotation shaft 11 and that is close to the excitation current receiving structure 105, and the third through hole is connected to the first flow channel. A seventh flow channel may be disposed between the excitation current receiving structure 105 and the rotation shaft 11, and the seventh flow channel is connected to the third through hole. The cooling medium in the first flow channel may flow into the seventh flow channel through the third through hole to dissipate heat of the excitation current receiving structure 105, so that a heat dissipation effect of the rotor is further improved.

A molding material of the end plate 101 may be a metal material with a relatively large coefficient of thermal conductivity, to ensure heat exchange between the cooling medium and the excitation module 102 on the end plate 101.

As shown in FIG. 1 and FIG. 3, the end plate 101 further has a plurality of fourth grooves 113 connected to the third grooves 114. An outlet flow channel is formed by the fourth groove 113 and an end of the rotor iron core 12, the outlet flow channel has an outlet, and the third grooves 114 are connected to the fourth grooves 113, so that the cooling medium entering the third groove 114 can flow out of the rotor 100 through the outlet of the outlet flow channel. When entering the third groove 114 through the backflow channel and then flowing out from the outlet flow channel, the cooling medium can exchange heat with the excitation module 102 on the end plate 101, so that heat dissipation of the excitation module 102 is further strengthened, and a heat dissipation effect of the excitation module 102 is improved.

An opening 113c may be disposed at an end that is of the fourth groove 113 and that is close to an outer side of the rotor iron core 12, so that the outlet is formed on the outlet flow channel.

In this embodiment of this application, the outlet of the outlet flow channel may be disposed adjacent to the other end of the stator winding in the motor, so that the cooling medium is swung to the end of the stator winding under centrifugal action to dissipate heat of the stator winding.

In this embodiment of this application, the third groove 114 may partially cover the first radial flow channel 151b, or the third groove 114 may fully cover the first radial flow channel 151b. To facilitate coverage setting of the third groove 114 and the first radial flow channel 151b, as shown in FIG. 3, the end plate 101 may be a circular plate, the third groove 114 is disposed in a radial direction of the end plate 101, and the fourth groove 113 is also disposed in the radial direction of the end plate 101.

As shown in FIG. 1 and FIG. 3, the fourth groove 113 includes a plurality of connected arc-shaped grooves 113a, the plurality of arc-shaped grooves 113a are disposed in the radial direction of the rotor iron core 12, and there is a protrusion 113b on a groove wall of the arc-shaped groove 113a that is formed toward the inside or the outside of the groove. The arc-shaped groove helps reduce a flow speed of a cooling medium in the fourth groove 113. In addition, disposing the protrusion 113b also impedes flow of the cooling medium to some extent, so that the cooling medium can stay in the outlet flow channel for a relatively long time, thereby improving a heat dissipation effect of the excitation module 102 disposed on the end plate 101.

The third groove 114 may be a sector-shaped groove, and the fourth groove 113 may also be a sector-shaped groove including a plurality of arc-shaped grooves 113a. In this way, the third groove 114 and the fourth groove 113 have relatively large areas, so that a contact area between the cooling medium and the end plate 101 is increased, and a heat dissipation effect of the excitation module 102 on the end plate 101 is further improved. Specifically, as shown in FIG. 3, in a direction from a center of the end plate 101 to outer circumference of the end plate 101, radians of the plurality of arc-shaped grooves 113a may gradually increase, to form the sector-shaped fourth groove 113.

In this embodiment of this application, as shown in FIG. 4 and FIG. 6, the second flow channel 15 includes a first inlet end 151, a first axial flow channel 152, and a first outlet end 153 that are connected to each other, the first inlet end 151 may include a first radial flow channel 151b and an equalization flow channel 151a, the equalization flow channel 151a is distributed in the circumferential direction of the rotor iron core 12, the first radial flow channel 151b is distributed in the radial direction of the rotor iron core 12, the equalization flow channel 151a may be disposed close to the rotation shaft 11, the first groove 191 is connected to the equalization flow channel 151a, and the equalization flow channel 151a is connected to the first radial flow channel 151b. The cooling medium in the first flow channel 14 enters the first groove 191 through the first through hole 111, flows through the equalization flow channel 151a and the first radial flow channel 151b, and then flows into the first axial flow channel 152 to dissipate heat of the rotor winding 13.

Two or more first radial flow channels 151b may be connected by using the equalization flow channel 151a, so that a quantity of openings on the rotation shaft 11 can be reduced, and strength of the rotation shaft 11 can be ensured. As shown in FIG. 4, in this embodiment, two adjacent first radial flow channels 151b are connected to each other by using one equalization flow channel 151a, and a cooling medium that flows out of the connection flow channel can separately enter the two first radial flow channels 151b through the equalization flow channel 151a.

In this embodiment of this application, every two adjacent first radial flow channels 151b disposed in the circumferential direction of the rotor iron core 12 may be connected by using one equalization flow channel 151a, or some adjacent first radial flow channels 151b are connected by using one equalization flow channel 151a, and the equalization flow channel 151a may be arc-shaped or annular.

In this embodiment of this application, a radial spacing is a distance between two inner walls of the first outlet end 153 in a radial direction. When a radial spacing of the first outlet end 153 is the same as a radial spacing of the first axial flow channel 152, the cooling medium flows out closer to a side that is of the second flow channel 15 and that is away from the rotation shaft 11 under centrifugal action, and a flow speed is relatively high. Therefore, a contact area between the cooling medium and the rotor iron core 12 and the rotor winding 13 is relatively small, and a cooling time of the cooling medium is relatively short, causing a relatively poor heat dissipation effect.

In this embodiment of this application, as shown in FIG. 1 and FIG. 6, a radial spacing of the first outlet end 153 is less than a radial spacing of the first axial flow channel 152. In this way, flow of the cooling medium is impeded, and a flow direction of the cooling medium is changed, so that the cooling medium can flow closer to a side that is of the second flow channel 15 and that is close to the rotation shaft 11, thereby increasing a contact area between the cooling medium and the rotor iron core 12 and the rotor winding 13 and a cooling time of the cooling medium and further improving a heat dissipation effect of the rotor 100.

In this embodiment of this application, the cooling medium may be an oil cooling liquid, or may be a water cooling liquid, or may be another liquid cooling substance. A magnetic core may be further disposed on the rotor iron core 12. For heat dissipation of the magnetic core, a hole may be disposed in an axial direction of the magnetic core, and the cooling medium enters the magnetic core through the hole to implement heat dissipation.

In this embodiment of this application, as shown in FIG. 1 and FIG. 4, the cooling medium first enters the first flow channel 14, then enters the first groove 191 through the first through hole 111, enters the equalization flow channel 151a after passing through the first groove 191, then enters the first radial flow channel 151b, and is filled in the third groove 114. One part of the cooling medium enters the first axial flow channel 152, and the cooling medium in the first axial flow channel 152 can exchange heat with the rotor winding 13 to dissipate heat of the rotor winding 13, and a cooling medium obtained after heat exchange flows out from the first outlet end 153, and is swung to one end of the stator winding under action of a centrifugal force. One part of the cooling medium enters the outlet flow channel, flows out from the outlet end of the outlet flow channel, and is swung to the other end of the stator winding under centrifugal action. The cooling medium filled in the third groove 114 and the cooling medium in the outlet flow channel can exchange heat with the excitation module 102 on the end plate 101 to dissipate heat of the excitation module 102.

### Embodiment 2

Based on Embodiment 1, according to the rotor 100 provided in this embodiment of this application, the rotation shaft 11 further has a second through hole 112, the first through hole 111 is adjacent to one end of the rotor iron core 12, the second through hole 112 is adjacent to the other end of the rotor iron core 12, the second through hole 112 is connected to the first flow channel 14, and the cooling medium in the first flow channel 14 may flow out of the rotation shaft 11 through the second through hole 112.

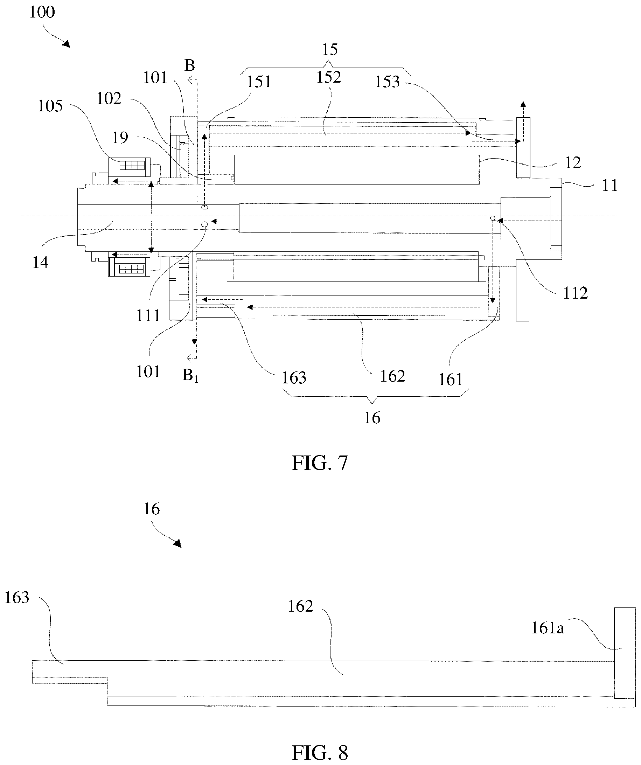

Specifically, as shown in FIG. 7 and FIG. 8, there is the first through hole 111 and the second through hole 112 respectively at positions of the rotation shaft 11 that are close to both ends of the rotor iron core 12, the first through hole 111 may be located at the first end of the rotation shaft 11, and the second through hole 112 is located at the second end of the rotation shaft 11. Alternatively, the first through hole 111 may be located at the second end of the rotation shaft 11, and the second through hole 112 is located at the first end of the rotation shaft 11. Both the first through hole 111 and the second through hole 112 are connected to the first flow channel 14. One part of the cooling medium in the first flow channel 14 flows out of the rotation shaft 11 through the first through hole 111, and the other part flows out of the rotation shaft 11 through the second through hole 112.

The rotor iron core 12 further has a third flow channel 16, and both ends of the third flow channel 16 extend to both ends of the rotor iron core 12. The third flow channel 16 includes a second inlet end 161, a second axial flow channel 162, and a second outlet end 163 that are connected to each other, and the second inlet end 161 is connected to the second through hole 112. In other words, the second through hole 112 is connected to one end of the second inlet end 161, the other end of the second inlet end 161 is connected to one end of the second axial flow channel 162, and the other end of the second axial flow channel 162 is connected to the second outlet end 163. The second axial flow channel 162 is located between two of some adjacent rotor windings 13, and the cooling medium in the first flow channel 14 flows into the second axial flow channel 162 after passing through the second through hole 112 and the second inlet end 161.

Specifically, as shown in FIG. 7 and FIG. 8, the first through hole 111 is located at the second end of the rotation shaft 11, the second through hole 112 is located at the first end of the rotation shaft 11, and the cooling medium enters the first flow channel 14 from the inlet end of the first flow channel 14 to exchange heat with the rotation shaft 11, the rotor iron core 12, and the rotor winding 13 to dissipate heat. Then one part of the cooling medium may flow out of the rotation shaft 11 through the second through hole 112 and flows into the second inlet end 161, and then flows through the second axial flow channel 162 and flows out from the second outlet end 163. The second axial flow channel 162 is located in a gap between two of some adjacent rotor windings 13, in other words, the second axial flow channel 162 is relatively close to the rotor winding 13. In this way, the cooling medium flowing through the second axial flow channel 162 can better dissipate heat of the rotor winding 13.

The other part of the cooling medium may flow out of the rotation shaft 11 through the first through hole 111 and flow into the first inlet end 151 of the second flow channel 15, and then flow out of the first outlet end 153 after flowing through the first axial flow channel 152. The first axial flow channel 152 is located in a gap between two of some adjacent rotor windings 13. In this way, heat dissipation of the rotor winding 13 is jointly implemented by using the first axial flow channel 152 and the second axial flow channel 162, so that a heat dissipation effect of the rotor windings 13 is effectively improved.

The second inlet end 161 may be located at the second end of the rotor iron core 12, and the second outlet end 163 is located at the first end of the rotor iron core 12, so that the second through hole 112 is connected to the second inlet end 161. To connect the first through hole 111 to the first inlet end 151, the first inlet end 151 may be located at the first end of the rotor iron core 12, and the first outlet end 153 may be located at the second end of the rotor iron core 12. In other words, directions of an inlet and an outlet of the second flow channel 15 are opposite to those of the third flow channel 16.

In this embodiment of this application, the first axial flow channel 152 is disposed between two of some adjacent rotor windings 13, and the second axial flow channel 162 is disposed between two of some adjacent rotor windings 13. There may be a plurality of second flow channels 15 and third flow channels 16 in the circumferential direction of the rotor iron core 12. The second flow channel 15 and the third flow channel 16 may be distributed on a same arc of the rotor iron core 12. For example, one third flow channel 16 may be disposed between two adjacent second flow channels 15. Alternatively, the second flow channel 15 and the third flow channel 16 may be distributed on two different arcs. For example, the third flow channel 16 may be located on a side that is of the second flow channel 15 and that is away from the rotation shaft 11, in other words, the second flow channel 15 is located between the third flow channel 16 and the rotation shaft 11.

The second outlet end 163 of the third flow channel 16 may be adjacent to the other end of the stator winding of the motor. In this way, under action of a centrifugal force, the cooling medium flowing out from the second outlet end 163 can be swung to the other end of the stator winding to dissipate heat of the stator winding.

In this embodiment of this application, as shown in FIG. 7, the rotor 100 further includes a first shaft sleeve 19, the first shaft sleeve 19 is sleeved on the rotation shaft 11, the first shaft sleeve 19 is located on one side of the rotor iron core 12, and the first shaft sleeve 19 is adjacent to the first through hole 111. As shown in FIG. 2 and FIG. 7, the first shaft sleeve 19 has a first groove 191, one end of the first groove 191 is connected to the first through hole 111, and the other end of the first groove 191 is connected to the first inlet end 151, in other words, the first through hole 111 is connected to the first inlet end 151 by using the first groove 191. The cooling medium in the first flow channel 14 enters the first groove 191 through the first through hole 111, enters the first inlet end 151 from the first groove 191, and then flows into the first axial flow channel 152 to dissipate heat of the rotor winding 13.

The first groove 191 may be located on a surface that is of the first shaft sleeve 19 and that is away from the rotor iron core 12, and a connection flow channel may be formed between the first groove 191 and an end surface of an end plate 101 located outside the first shaft sleeve 19. One end of the connection flow channel is connected to the first through hole 111, and the other end of the connection flow channel is connected to the first inlet end 151, so that the first through hole 111 is connected to the first inlet end 151 by using the first groove 191.

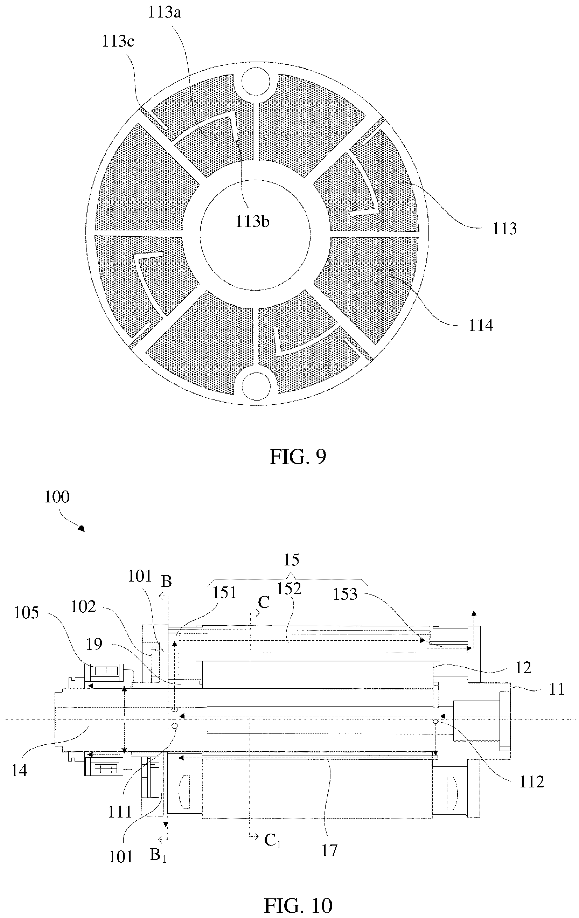

The rotor 100 further includes an end plate 101 and an excitation module 102. As shown in FIG. 7, the end plate 101 is located on one side of the rotor iron core 12, the end plate 101 is adjacent to the first inlet end 151, the shaft sleeve 19 is located between the end plate 101 and the rotor iron core 12, and the excitation module 102 is disposed on the end plate 101. As shown in FIG. 7 and FIG. 9, the end plate 101 has a plurality of third grooves 114, the plurality of third grooves 114 are distributed in the circumferential direction of the rotor iron core 12, and the plurality of third grooves 114 may be located on a surface that is of the end plate 101 and that is close to the rotor iron core 12.

As shown in FIG. 6 and FIG. 7, the first inlet end 151 of the second flow channel 15 includes a first radial flow channel 151b distributed in a radial direction of the rotor iron core 12, the first through hole 111 is connected to the first radial flow channel 151b, the first radial flow channel 151b is connected to the first axial flow channel 152, and the third groove 114 on the end plate 101 covers a part of the first radial flow channel 151b. A backflow channel may be formed by a part of overlapping between the third groove 114 and the first radial flow channel 151b. In this way, the cooling medium that enters the first radial flow channel 151b can enter the third groove 114 on the end plate 101 through the backflow channel. In other words, when the rotor 100 rotates, the cooling medium is filled in the third groove 114 on the end plate 101 under action of a centrifugal force to dissipate heat of the excitation module 102 disposed on the end plate 101, so that a heat dissipation effect of the excitation module 102 is improved, and a heat dissipation problem of the excitation module 102 is resolved.

Different from Embodiment 1, in this embodiment of this application, as shown in FIG. 7 and FIG. 9, the end plate 101 further has a plurality of fourth grooves 113, an outlet flow channel is formed by the fourth groove 113 and an end of the rotor iron core 12, the outlet flow channel is connected to the second outlet end 163, the outlet flow channel has an outlet, and a cooling medium in the third flow channel 16 flows into the outlet flow channel through the second outlet end 163 after flowing through the second axial flow channel 162, and flows out of the rotor 100 from the outlet of the outlet flow channel.

As shown in FIG. 6 and FIG. 8, structures of the third flow channel 16 and the second flow channel 15 may be the same, and positions of an inlet and an outlet of the third flow channel 16 are opposite to those of the second flow channel 15. Specifically, the third flow channel 16 includes a second inlet end 161, a second axial flow channel 162, and a second outlet end 163 that are connected to each other, the second inlet end 161 may include a second radial flow channel 161a distributed in a radial direction of the rotor icon core 12, the second through hole 112 is connected to the second radial flow channel 161a, the second radial flow channel 161a is connected to the second axial flow channel 162, and the second radial flow channel 161a can connect the third flow channel 16 to the second through hole 112.

Like the second flow channel 15, the first inlet end 161 of the third flow channel 16 may also include an equalization flow channel (not shown in the figure) distributed in the circumferential direction of the rotor iron core 12. The equalization flow channel is disposed close to the rotation shaft 11, the second through hole 112 is connected to the equalization flow channel, and the equalization flow channel is connected to the second radial flow channel 161a.

As shown in FIG. 7 and FIG. 8, a radial spacing of the second outlet end 163 is less than a radial spacing of the second axial flow channel 162. In this way, flow of the cooling medium is impeded, and a flow direction of the cooling medium is changed, so that the cooling medium can flow closer to a side close to the rotation shaft 11 instead of flowing out close to a side away from the rotation shaft 11 under action of a centrifugal force, thereby increasing a cooling contact area between the cooling medium and the rotor iron core 12 and the rotor winding 13 and a cooling time of the cooling medium and further improving a heat dissipation effect of the rotor 100.

In addition, the second outlet end 163 is connected to the outlet flow channel. When a radial spacing of the second outlet end 163 is the same as a radial spacing of the second axial flow channel 162, the cooling medium flows into the outlet flow channel closer to a side that is of the third flow channel 16 and that is away from the rotation shaft 11 under action of a centrifugal force, a flow speed is relatively high, and the cooling medium stays in the outlet flow channel for a relatively short time, reducing a heat dissipation effect of the excitation module 102.

Enabling the radial spacing of the second outlet end 163 to be less than the radial spacing of the second axial flow channel 162 impedes flow of the cooling medium, so that the cooling medium flows closer to a side close to the rotation shaft 11, which, compared with a case in which the cooling medium flows out close to a side away from the rotation shaft 11 under action of a centrifugal force, can enable more cooling media to be filled in the outlet flow channel and to stay in the outlet flow channel for a relatively long time, thereby increasing the cooling contact area between the cooling medium and the excitation module 102 on the end plate 101 and the cooling time of the cooling medium and improving a heat dissipation effect of the excitation module 102.

In this embodiment of this application, the second through hole 112 may be connected to the second inlet end 161 by using a glue-dispensed flow channel. Specifically, the glue dispensed flow channel may be formed between the second through hole 112 and the second inlet end 161 through glue dispensing, to connect the second through hole 112 to the second inlet end 161.

In this embodiment of this application, as shown in FIG. 7, the cooling medium first enters the first flow channel 14. One part of the cooling medium enters the first groove 191 through the first through hole 111, enters the equalization flow channel 151a after passing through the first groove 191, then enters the first radial flow channel 151b and is filled in the third groove 114, and then enters the first axial flow channel 152 to exchange heat with the rotor winding 13 to dissipate heat of the rotor winding 13. A cooling medium obtained after heat exchange flows out from the first outlet end 153, and is swung to an end of the stator winding under action of a centrifugal force.

The other part of the cooling medium flows into the second radial flow channel 161a of the third flow channel 16 through the second through hole 112, flows through the second radial flow channel 161a, and flows into the second axial flow channel 162 to exchange heat with the rotor winding 13 to dissipate heat of the rotor winding 13. The cooling medium flows out of the third flow channel 16 through the second outlet end 163 and flows into the outlet flow channel, then flows out from the outlet of the outlet flow channel, and is swung to an end of the stator winding under action of a centrifugal force. The cooling medium flowing through the third groove 114 and the outlet flow channel exchanges heat with the excitation module 102 on the end plate 101 to dissipate heat of the excitation module 102.

### Embodiment 3

Based on Embodiment 1, according to the rotor 100 provided in this embodiment of this application, the rotation shaft 11 further has a second through hole 112, the first through hole 111 is adjacent to one end of the rotor iron core 12, the second through hole 112 is adjacent to the other end of the rotor iron core 12, the second through hole 112 is connected to the first flow channel 14, and the cooling medium in the first flow channel 14 may flow out of the rotation shaft 11 through the second through hole 112.

Specifically, as shown in FIG. 10, there is the first through hole 111 and the second through hole 112 respectively at positions of the rotation shaft 11 that are close to both ends of the rotor iron core 12, the first through hole 111 may be located at the first end of the rotation shaft 11, and the second through hole 112 is located at the second end of the rotation shaft 11. Alternatively, the first through hole 111 may be located at the second end of the rotation shaft 11, and the second through hole 112 is located at the first end of the rotation shaft 11. Both the first through hole 111 and the second through hole 112 are connected to the first flow channel 14. One part of the cooling medium in the first flow channel 14 flows out of the rotation shaft 11 through the first through hole 111, and the other part flows out of the rotation shaft 11 through the second through hole 112.

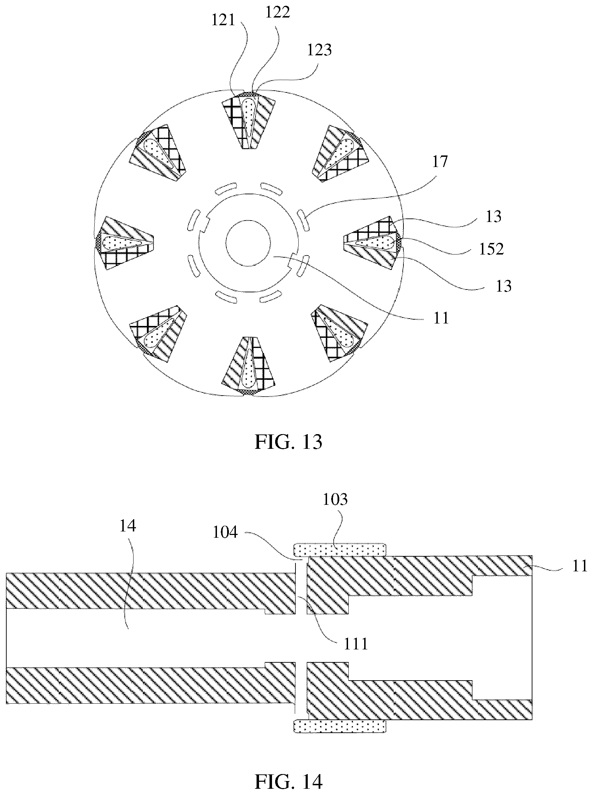

The rotor iron core 12 further has a fourth flow channel 17 distributed in the axial direction. As shown in FIG. 10 and FIG. 13, a plurality of fourth flow channels 17 may be distributed in the circumferential direction of the rotor iron core 12, the fourth flow channel 17 is located between the rotor winding 13 and the rotation shaft 11, the fourth flow channel 17 is connected to the second through hole 112, and the cooling medium in the first flow channel 14 flows into the fourth flow channel 17 after passing through the second through hole 112. As shown in FIG. 10, the first through hole 111 is located at the second end of the rotation shaft 11, the second through hole 112 is located at the first end of the rotation shaft 11, the first through hole 111 is connected to the second flow channel 15, the second through hole 112 is connected to the fourth flow channel 17, and the fourth flow channel 17 is located between the rotor winding 13 and the rotation shaft 11. One part of the cooling medium in the first flow channel 14 flows out of the rotation shaft 11 through the first through hole 111 and flows into the first inlet end 151 of the second flow channel 15, then flows through the first axial flow channel 152 to exchange heat with the rotor winding 13 to dissipate heat of the rotor winding 13, and then flows out from the first outlet end 153.

The other part of the cooling medium flows out of the rotor 11 through the second through hole 112 and flows into the fourth flow channel 17 to exchange heat with the rotor iron core 12 and the rotor winding 13 to dissipate heat, and then flows out from the fourth flow channel 17. In this way, heat dissipation of the rotor iron core 12 and the rotor winding 13 is jointly implemented by using the second flow channel 15 disposed in a gap between rotor windings 13 and the fourth flow channel 17 disposed in the rotor iron core 12, so that a heat dissipation effect of the rotor winding 13 is further improved. In addition, the fourth flow channel 17 helps improve a heat dissipation effect of the rotor iron core 12, so that an overall heat dissipation effect of the rotor 100 is effectively improved.

The fourth flow channel 17 is located between the rotor winding 13 and the rotation shaft 11. Because the rotor winding 13 generates a relatively large amount of heat in a running process, the fourth flow channel 17 may be enabled to be as close to the rotor winding 13 as possible without affecting performance of the rotor winding 13, to improve a heat dissipation effect of the rotor winding 13.

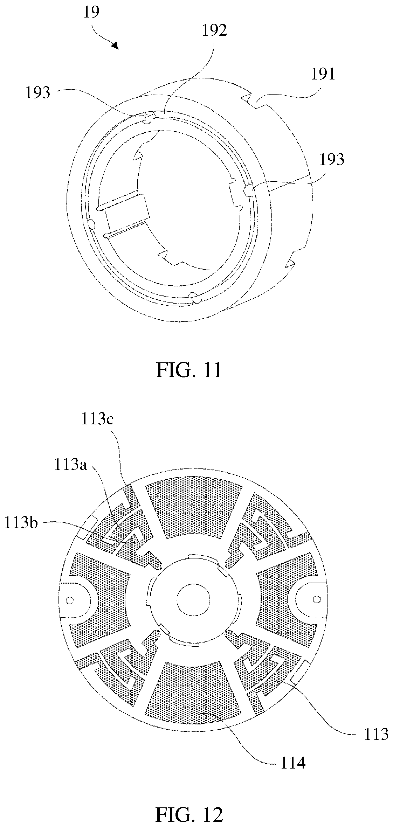

In this embodiment of this application, as shown in FIG. 10, the rotor 100 further includes a first shaft sleeve 19, the first shaft sleeve 19 is sleeved on the rotation shaft 11, the first shaft sleeve 19 is located on one side of the rotor iron core 12, and the first shaft sleeve 19 is adjacent to the first through hole 111. As shown in FIG. 10 and FIG. 11, the first shaft sleeve 19 has a first groove 191, one end of the first groove 191 is connected to the first through hole 111, and the other end of the first groove 191 is connected to the first inlet end 151. In this way, the cooling medium in the first flow channel 14 enters the first groove 191 through the first through hole 111, enters the first inlet end 151 from the first groove 191, and then flows into the first axial flow channel 152 to dissipate heat of the rotor winding 13.

Different from Embodiment 1, in this embodiment of this application, as shown in FIG. 10 and FIG. 11, the first shaft sleeve 19 further has a second groove 192, and the second groove 192 is distributed in a circumferential direction of the first shaft sleeve 19. Specifically, the second groove 192 may be located on a surface that is of the first shaft sleeve 19 and that is close to the rotor iron core 12, a centralization flow channel is formed by the second groove 192 and an end of the rotor iron core 12, a third through hole 193 is cut in the second groove 192, and the third through hole 193 is disposed in an axial direction of the first shaft sleeve 19, and the centralization flow channel is connected to the fourth flow channel 17. In this way, the cooling medium in the fourth flow channel 17 can flow into the centralization flow channel and flow out of the rotor iron core 12 through the third through hole 193.

The rotor 100 further includes an end plate 101 and an excitation module 102. As shown in FIG. 10, the end plate 101 is located on one side of the rotor iron core 12, the end plate 101 is adjacent to the first inlet end 151, and the excitation module 102 is disposed on the end plate 101. As shown in FIG. 10 and FIG. 12, the end plate 101 has a plurality of third grooves 114, and the plurality of third grooves 114 are distributed in the circumferential direction of the rotor iron core 12.

As shown in FIG. 6 and FIG. 10, the first inlet end 151 of the second flow channel 15 includes a first radial flow channel 151b distributed in a radial direction of the rotor iron core 12, the first through hole 111 is connected to the first radial flow channel 151b, the first radial flow channel 151b is connected to the first axial flow channel 152, and the third groove 114 on the end plate 101 covers a part of the first radial flow channel 151b. A backflow channel may be formed by a part of overlapping between the third groove 114 and the first radial flow channel 151b. In this way, the cooling medium that enters the first radial flow channel 151b can enter the third groove 114 on the end plate 101 through the backflow channel. In other words, when the rotor 100 rotates, the cooling medium is filled in the third groove 114 on the end plate 101 under action of a centrifugal force to dissipate heat of the excitation module 102 disposed on the end plate 101, so that a heat dissipation effect of the excitation module 102 is improved, and a heat dissipation problem of the excitation module 102 is resolved.

Different from Embodiment 1, in this embodiment of this application, as shown in FIG. 10 and FIG. 12, the end plate 101 further has a plurality of fourth grooves 113, an outlet flow channel is formed by the fourth groove 113 and an end of the rotor iron core 12, the outlet flow channel has an outlet, and the outlet flow channel is connected to the third through hole 193. In this way, the cooling medium in the centralization flow channel can flow into the outlet flow channel through the third through hole 193, and the cooling medium in the outlet flow channel flows out of the rotor 100 from the outlet of the outlet flow channel after exchanging heat with the excitation module 102 on the end plate 101. In other words, the cooling medium in the fourth flow channel 17 passes through the centralization flow channel, the third through hole 193, and the outlet flow channel, and then flows out of the rotor 100 from the outlet of the outlet flow channel, to further improve a heat dissipation effect of the excitation module 102.

The second through hole 112 may be connected to the fourth flow channel 17 in different manners. For example, a connection flow channel may be formed between the second through hole 112 and an inlet end of the fourth flow channel 17 through glue dispensing, so that the second through hole 112 is connected to the fourth flow channel 17 by using the connection flow channel.

Alternatively, a mechanical part having a connection flow channel may be disposed between the second through hole 112 and the fourth flow channel 17. Specifically, for example, in this embodiment of this application, as shown in FIG. 10 and FIG. 14, the rotor 100 further includes a second shaft sleeve 103 sleeved on the rotation shaft 11, the second shaft sleeve 103 is adjacent to the second through hole 112, the second shaft sleeve 103 has a circumferential flow channel 104 distributed in a circumferential direction, the second through hole 112 is connected to the circumferential flow channel 104, and the circumferential flow channel 104 is connected to the fourth flow channel 17. In other words, the second through hole 112 is connected to the fourth flow channel 17 by using the circumferential flow channel 104, so that the cooling medium in the first flow channel 14 flows into the circumferential flow channel 104 after passing through the second through hole 112, and then enters the fourth flow channel 17.

In this embodiment of this application, as shown in FIG. 10, the cooling medium first enters the first flow channel 14. One part of the cooling medium enters the first groove 191 through the first through hole 111, enters the equalization flow channel 151a after passing through the first groove 191, then enters the first radial flow channel 151b and is filled in the third groove 114, then flows into the first axial flow channel 152 to exchange heat with the rotor winding 13 to dissipate heat of the rotor winding 13, then flows out from the first outlet end 153, and is swung to an end of the stator winding under action of a centrifugal force.

The other part of the cooling medium flows into the circumferential flow channel 104 after passing through the second through hole 112, then flows into the fourth flow channel 17 to exchange heat with the rotor iron core 12 and the rotor winding 13, then flows into the centralization flow channel from the fourth flow channel 17, then flows out of the rotor iron core 12 through the third through hole 193 and flows into the outlet flow channel, flows out from the outlet of the outlet, and is swung to an end of the stator winding under action of a centrifugal force. The cooling medium flowing through the backflow channel and the outlet flow channel exchanges heat with the excitation module 102 on the end plate 101 to dissipate heat of the excitation module 102.

### Embodiment 4

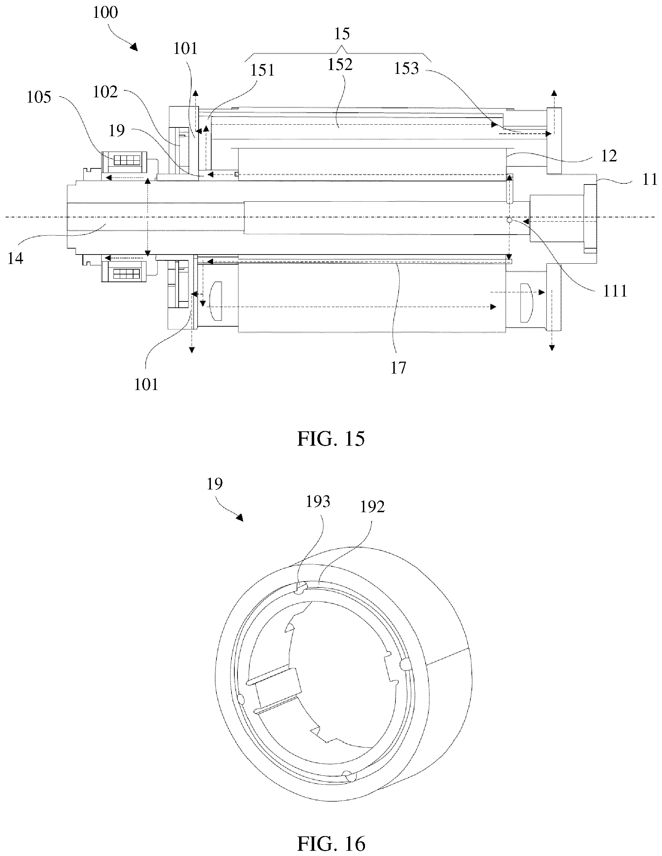

Based on Embodiment 1, according to the rotor 100 provided in this embodiment of this application, as shown in FIG. 15, the rotor iron core 12 further has a fourth flow channel 17 distributed in the axial direction, a plurality of fourth flow channels 17 may be disposed in the circumferential direction of the rotor iron core 12, and the fourth flow channel 17 is located between the rotor winding 13 and the rotation shaft 11.

One end of the fourth flow channel 17 is connected to the first through hole 111, and the other end of the fourth flow channel 17 is connected to the first inlet end 151. In other words, the first through hole 111 is connected to the first inlet end 151 of the second flow channel 15 by using the fourth flow channel 17. The cooling medium in the first flow channel 14 flows into the first axial flow channel 152 after sequentially passing through the first through hole 111, the fourth flow channel 17, and the first inlet end 151, and flows out of the rotor 100 from the first outlet end 153.

As shown in FIG. 15, the first through hole 111 may be located at the first end of the rotation shaft 11, the first through hole 111 is connected to the fourth flow channel 17, and the fourth flow channel 17 is connected to the first inlet end 151. The cooling medium in the first flow channel 14 enters the fourth flow channel 17 through the first through hole 111 to exchange heat with the rotor iron core 12 and the rotor winding 13, then flows into the first inlet end 151 of the second flow channel 15 from the fourth flow channel 17, and then flows into the first axial flow channel 152. After exchanging heat with the rotor winding 13, the cooling medium in the first axial flow channel 152 flows out from the first outlet end 153. In this way, heat dissipation of the rotor iron core 12 and the rotor winding 13 is jointly implemented by using the second flow channel 15 in a gap between rotor windings 13 and the fourth flow channel 17 in the rotor iron core 12, so that a heat dissipation effect of the rotor iron core 12 is further improved, and a heat dissipation effect of the rotor 100 is also effectively improved.

The fourth flow channel 17 is located between the rotor winding 13 and the rotation shaft 11. Because the rotor winding 13 generates a relatively large amount of heat in a running process, the fourth flow channel 17 may be enabled to be as close to the rotor winding 13 as possible without affecting performance of the rotor winding 13, to improve a heat dissipation effect of the rotor winding 13.

As shown in FIG. 15, the rotor 100 further includes a first shaft sleeve 19 sleeved on the rotation shaft 11. In this embodiment of this application, the first shaft sleeve 19 is adjacent to an outlet end of the fourth flow channel 17. Because the first through hole 111 is adjacent to the inlet end of the first flow channel 14, and the first through hole 111 is connected to the second flow channel 15 by using the fourth flow channel 17, as shown in FIG. 15, the first through hole 111 is adjacent to an inlet end of the fourth flow channel 17, and the first inlet end 151 of the second flow channel 15 is adjacent to the outlet end of the fourth flow channel 17, the first shaft sleeve 19 is adjacent to the outlet end of the fourth flow channel 17.

As shown in FIG. 15 and FIG. 16, the first shaft sleeve 19 has a second groove 192, the second groove 192 is distributed in a circumferential direction of the first shaft sleeve 19, a centralization flow channel is formed by the second groove 192 and an end of the rotor iron core 12, the centralization flow channel is connected to the fourth flow channel 17, a third through hole 193 disposed in an axial direction of the first shaft sleeve 19 is cut in the second groove 192, and the centralization flow channel is connected to the first inlet end 151 by using the third through hole 193. The cooling medium in the fourth flow channel 17 may flow into the centralization flow channel, then flow into the first inlet end 151 through the third through hole 193, and then flow into the first axial flow channel 152 to dissipate heat of the rotor winding 13.

The rotor 100 further includes an end plate 101 and an excitation module 102. As shown in FIG. 15, the end plate 101 is located on one side of the rotor iron core 12, the end plate 101 is adjacent to the first inlet end 151, and the excitation module 102 is disposed on the end plate 101. As shown in FIG. 3, the end plate 101 has a plurality of third grooves 114, and the plurality of third grooves 114 are distributed in the circumferential direction of the rotor iron core 12.

As shown in FIG. 6 and FIG. 15, the first inlet end 151 of the second flow channel 15 includes a first radial flow channel 151b distributed in a radial direction of the rotor iron core 12, and the fourth flow channel 17 is connected to the first radial flow channel 151b. Specifically, the fourth flow channel may be connected to the first radial flow channel 151b through the centralization flow channel and the third through hole on the centralization flow channel. The first radial flow channel 151b is connected to the first axial flow channel 152, and the third groove 114 on the end plate 101 covers a part of the first radial flow channel 151b. A backflow channel may be formed by a part of overlapping between the third groove 114 and the first radial flow channel 151b. In this way, a cooling medium that enters the first radial flow channel 151b can enter the third groove 114 on the end plate 101 through the backflow channel. In other words, when the rotor 100 rotates, the cooling medium is filled in the third groove 114 on the end plate 101 under action of a centrifugal force to dissipate heat of the excitation module 102 disposed on the end plate 101, so that a heat dissipation effect of the excitation module 102 is improved, and a heat dissipation problem of the excitation module 102 is resolved.

As shown in FIG. 3 and FIG. 15, the end plate 101 further has a plurality of fourth grooves 113 connected to the third grooves 114. An outlet flow channel is formed by the fourth groove 113 and an end of the rotor iron core 12, the outlet flow channel has an outlet, and the third grooves 114 are connected to the fourth grooves 113, so that a cooling medium entering the third groove 114 through the backflow channel can flow into the outlet flow channel, and flow out of the rotor 100 through the outlet of the outlet flow channel.

In this embodiment of this application, the first through hole 111 may be connected to the fourth flow channel 17 in different manners. For example, a connection flow channel may be formed between the first through hole 111 and the inlet end of the fourth flow channel 17 through glue dispensing, so that the first through hole 111 is connected to the fourth flow channel 17 by using the connection flow channel.

Alternatively, a mechanical part having a connection flow channel may be disposed between the first through hole 111 and the fourth flow channel 17. Specifically, for example, the rotor 100 may further include a second shaft sleeve (not shown in the figure) sleeved on the rotation shaft 11, the second shaft sleeve is disposed on an end that is of the rotation shaft 11 and that is close to the first through hole 111, the second shaft sleeve has a circumferential flow channel distributed in a circumferential direction, the first through hole 111 is connected to the circumferential flow channel, and the circumferential flow channel is connected to the fourth flow channel 17. In other words, the first through hole 111 is connected to the fourth flow channel 17 by using the circumferential flow channel, so that the cooling medium in the first flow channel 14 flows into the circumferential flow channel after passing through the first through hole 111, and then enters the fourth flow channel 17.

In this embodiment of this application, as shown in FIG. 15, the cooling medium first enters the first flow channel 14, and then enters the fourth flow channel 17 through the first through hole 111. After exchanging heat with the rotor iron core 12 and the rotor winding 13, the cooling medium in the fourth flow channel 17 enters the centralization flow channel, then flows into the first radial flow channel 151b of the first inlet end 151 through the third through hole 193, and is filled in the third groove 114. One part of the cooling medium enters the first axial flow channel 152 to exchange heat with the rotor winding 13 to dissipate heat of the rotor winding 13, then flows out from the first outlet end 153, and is swung to an end of the stator winding under action of a centrifugal force. The other part of the cooling medium enters the outlet flow channel, flows out from the outlet end of the outlet flow channel, and is swung to an end of the stator winding under action of a centrifugal force. The cooling medium flowing through the third groove 114 and the outlet flow channel may exchange heat with the excitation module 102 on the end plate 101 to dissipate heat of the excitation module 102.

### Embodiment 5

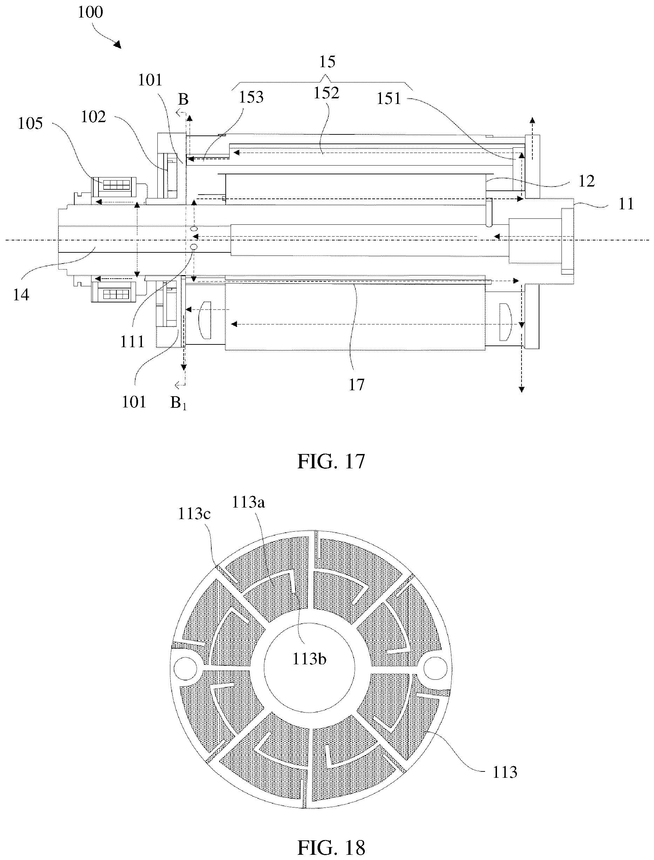

Different from Embodiment 4, according to the rotor 100 provided in this embodiment of this application, as shown in FIG. 17, the first through hole 111 is located at the second end of the rotation shaft 11, the first through hole 111 is connected to the fourth flow channel 17, and the fourth flow channel 17 is connected to the first inlet end 151. The cooling medium in the fourth flow channel 17 may exchange heat with the rotor iron core 12 and the rotor winding 13, then flow into the first inlet end 151 of the second flow channel 15 from the fourth flow channel 17, and then flow into the first axial flow channel 152. After exchanging heat with the rotor winding 13, the cooling medium in the first axial flow channel 152 flows out from the first outlet end 153. In this way, heat dissipation of the rotor iron core 12 and the rotor winding 13 is jointly implemented by using the second flow channel 15 in a gap between rotor windings 13 and the fourth flow channel 17 in the rotor iron core 12, so that a heat dissipation effect of the rotor winding 13 is further improved, and a heat dissipation effect of the rotor 100 is effectively improved.

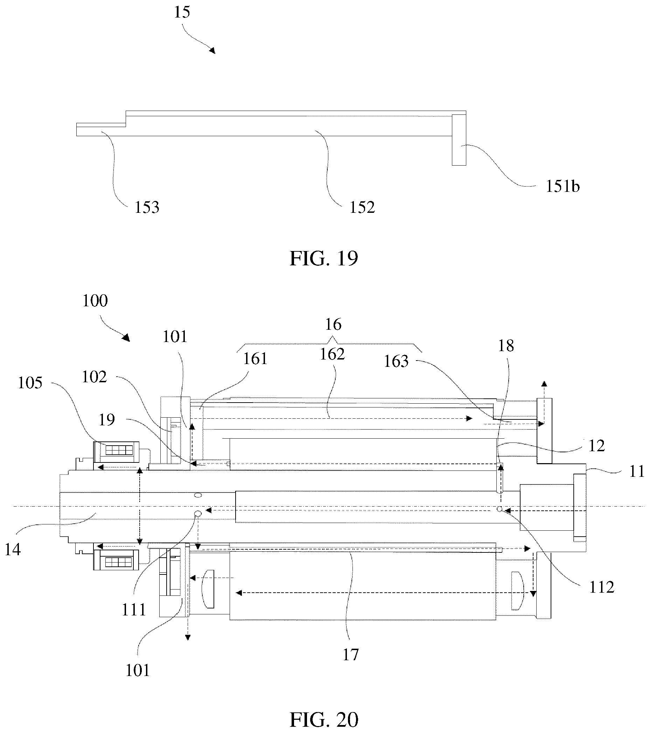

As shown in FIG. 17 and FIG. 19, in this embodiment of this application, the first through hole 111 is located at the second end of the rotation shaft 11, the first through hole 111 is connected to the first inlet end 151 by using the fourth flow channel 17, the first inlet end 151 of the second flow channel 15 may be located at the second end of the rotor iron core 12, and the first outlet end 153 of the second flow channel 15 is located at the first end of the rotor iron core 12.

The first through hole 111 may be connected to the fourth flow channel 17 in different manners. For example, a connection flow channel may be formed between the first through hole 111 and an inlet end of the fourth flow channel 17 through glue dispensing, so that the first through hole 111 is connected to the fourth flow channel 17 by using the connection flow channel. Alternatively, a mechanical part having a connection flow channel may be disposed between the first through hole 111 and the fourth flow channel 17. For details, refer to the second shaft sleeve in Embodiment 4. Details are not described again in this embodiment of this application.

As shown in FIG. 17, the rotor 100 further includes an end plate 101 and an excitation module 102. Different from Embodiment 4, in this embodiment of this application, the end plate 101 is adjacent to the first outlet end 153, and the excitation module 102 is disposed on the end plate 101.

As shown in FIG. 18, the end plate 101 has a plurality of fourth grooves 113, an outlet flow channel is formed by the fourth groove 113 and an end of the rotor iron core 12, the outlet flow channel has an outlet, the outlet flow channel is connected to the first outlet end 153, and the cooling medium in the second flow channel 15 may flow into the outlet flow channel through the first outlet end 153, and flow out of the rotor 100 from the outlet of the outlet flow channel.

The end plate 101 is adjacent to the first outlet end 153, and there is an outlet flow channel between the end plate 101 and the rotor iron core 12. The cooling medium can flow out of the rotor 100 through the outlet flow channel, and is swung to an end that is of the stator winding and that is close to the first through hole 111 under action of a centrifugal force, but cannot dissipate heat of an end that is of the stator winding and that is away from the first through hole 111. Therefore, in this embodiment of this application, there is also a sixth flow channel (not shown in the figure) at the second end of the rotor iron core 12. The sixth flow channel is connected to the second flow channel 15. As shown in FIG. 17, after the cooling medium enters the second flow channel 15, one part flows out of the rotor 100 through the sixth flow channel, and is swung to one end of the stator winding under action of a centrifugal force, and the other part flows into the first axial flow channel 152, flows out from the first outlet end 153, and is swing to the other end of the stator winding under action of a centrifugal force.

The sixth flow channel may be a channel formed, through glue dispensing, at a position that is on the rotor iron core 12 and that is close to one end of the stator winding, one end of the sixth flow channel is connected to the second flow channel 15, and the other end of the sixth flow channel has an opening.

In this embodiment of this application, as shown in FIG. 17, the cooling medium first enters the first flow channel 14, and then enters the fourth flow channel 17 through the first through hole 111. After exchanging heat with the rotor iron core 12 and the rotor winding 13 to dissipate heat, the cooling medium in the fourth flow channel 17 enters the first radial flow channel 151b through the first inlet end 151. One part of the cooling medium flows out from the sixth flow channel, and is swung to an end of the stator winding under action of a centrifugal force. The other part of the cooling medium flows into the first axial flow channel 152 to exchange heat with the rotor winding 13 to dissipate heat of the rotor winding 13, then flows out of the rotor iron core through the first outlet end 153, flows into the outlet flow channel, then flows out from the outlet of the outlet flow channel, and is swung to an end of the stator winding under action of a centrifugal force. The cooling medium flowing through the outlet flow channel may exchange heat with the excitation module 102 on the end plate 101 to dissipate heat of the excitation module 102.

### Embodiment 6

Based on Embodiment 2, as shown in FIG. 20, according to the rotor 100 provided in this embodiment of this application, the rotor iron core 12 further has a fourth flow channel 17 and a fifth flow channel 18 distributed in the axial direction, and both ends of the fourth flow channel 17 and the fifth flow channel 18 extend to both ends of the rotor iron core 12.

The fourth flow channel 17 and the fifth flow channel 18 are separately located between the rotor winding 13 and the rotation shaft 11. Specifically, there may be a plurality of fourth flow channels 17 and fifth flow channels 18 in the circumferential direction of the rotor iron core 12, and the fourth flow channel 17 and the fifth flow channel 18 may be distributed on a same arc of the rotor iron core 12. For example, one fifth flow channel 18 may be disposed between two adjacent fourth flow channels 17. Alternatively, the fourth flow channel 17 and the fifth flow channel 18 may be distributed on two different arcs. For example, the fifth flow channel 18 may be located on a side that is of the fourth flow channel 17 and that is away from the rotation shaft 11. In other words, the fourth flow channel 17 is located between the fifth flow channel 18 and the rotation shaft 11.

One end of the fourth flow channel 17 is connected to the first through hole 111, and the other end of the fourth flow channel 17 is connected to the first inlet end 151. In other words, the first through hole 111 is connected to the second flow channel 15 by using the fourth flow channel 17. The cooling medium in the first flow channel 14 flows into the first axial flow channel 152 after passing through the first through hole 111, the fourth flow channel 17, and the first inlet end 151.

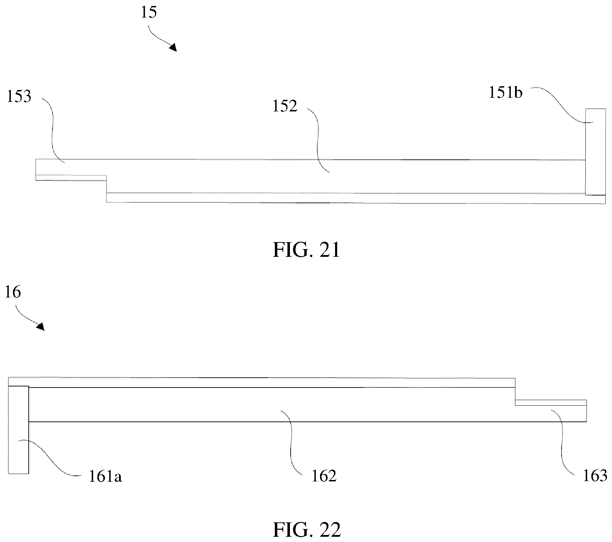

As shown in FIG. 20 and FIG. 21, the rotation shaft 11 has a first through hole 111 and a second through hole 112, the first through hole 111 may be located at the second end of the rotation shaft 11, the second through hole 112 may be located at the first end of the rotation shaft 11, the first through hole 111 is connected to the fourth flow channel 17, and the fourth flow channel 17 is connected to the first inlet end 151. The cooling medium in the first flow channel 14 may enter the fourth flow channel 17 through the first through hole 111. The cooling medium in the fourth flow channel 17 may exchange heat with the rotor iron core 12 and the rotor winding 13 to dissipate heat of the rotor 100, then flow into the first inlet end 151 of the second flow channel 15 from the fourth flow channel 17, and then flow into the first axial flow channel 152. The cooling medium in the first axial flow channel 152 may exchange heat with the rotor winding 13 to dissipate heat of the rotor winding 13.

As shown in FIG. 20 and FIG. 22, one end of the fifth flow channel 18 is connected to the second through hole 112, and the other end of the fifth flow channel 18 is connected to the second inlet end 161. The cooling medium in the first flow channel 14 flows into the second axial flow channel 162 after passing through the second through hole 112, the fifth flow channel 18, and the second inlet end 161. In other words, the second through hole 112 is connected to the third flow channel 16 by using the fifth flow channel 18. The cooling medium in the first flow channel 14 may enter the fifth flow channel 18 through the second through hole 112. The cooling medium in the fifth flow channel 18 may exchange heat with the rotor iron core 12 and the rotor winding 13 to dissipate heat of the rotor 100, then flow into the second inlet end 161 of the third flow channel 16 from the fifth flow channel 18, and then enter the second axial flow channel 162. The cooling medium in the second axial flow channel 162 may exchange heat with the rotor winding 13 to dissipate heat of the rotor winding 13.

In conclusion, in this embodiment of this application, heat dissipation of the rotor winding 13 is jointly implemented by using the first axial flow channel 152 and the second axial flow channel 162 that are disposed in gaps between rotor windings 13, so that a heat dissipation effect of the rotor winding 13 is effectively improved. In addition, heat dissipation of the rotor iron core 12 and the rotor winding 13 is jointly implemented by using the second flow channel 15 and the third flow channel 16 that are disposed in gaps between rotor windings 13 and the fourth flow channel 17 and the fifth flow channel 18 that are disposed in the rotor iron core 12, so that a heat dissipation effect of the rotor winding 13 is further improved, and a heat dissipation effect of the rotor 100 is improved.

The second through hole 112 may be connected to the fifth flow channel 18 in different manners. For example, a connection flow channel may be formed between the second through hole 112 and an inlet end of the fifth flow channel 18 through glue dispensing, so that the second through hole 112 is connected to the fifth flow channel 18 by using the connection flow channel.

Alternatively, a mechanical part having a connection flow channel may be disposed between the second through hole 112 and the fifth flow channel 18. Specifically, for example, the rotor 100 may further include a second shaft sleeve (not shown in the figure) sleeved on the rotation shaft 11, the second shaft sleeve is adjacent to the second through hole 112, the second shaft sleeve has a circumferential flow channel distributed in a circumferential direction, the first through hole 112 is connected to the circumferential flow channel, and the circumferential flow channel is connected to the fifth flow channel 18. In other words, the second through hole 112 is connected to the fifth flow channel 18 by using the circumferential flow channel, so that the cooling medium in the first flow channel 14 flows into the circumferential flow channel after passing through the second through hole 112, and then enters the fifth flow channel 18.

A second connection flow channel may be formed between the first through hole 111 and the fourth flow channel 17 through glue dispensing, so that the first through hole 111 is connected to the fourth flow channel 17 by using the second connection flow channel.

Different from Embodiment 2, in this embodiment of this application, as shown in FIG. 20, the first through hole 111 is connected to the second flow channel 15 by using the fourth flow channel 17, and the second through hole 112 is connected to the third flow channel 16 by using the fifth flow channel 18. For ease of connection, as shown in FIG. 21 and FIG. 22, the first inlet end 151 of the second flow channel 15 is located at the second end of the rotor iron core 12, and the second inlet end 161 of the third flow channel 16 is located at the first end of the rotor iron core 12.

In this embodiment of this application, as shown in FIG. 20, the rotor 100 further includes a first shaft sleeve 19 sleeved on the rotation shaft 11, the first shaft sleeve 19 is located on one side of the rotor iron core 12, and the first shaft sleeve 19 is adjacent to an outlet end of the fifth flow channel 18. Different from Embodiment 2, as shown in FIG. 16 and FIG. 20, the first shaft sleeve 19 has a second groove 192, the second groove 192 is distributed in a circumferential direction of the first shaft sleeve 19, a centralization flow channel is formed by the second groove 192 and an end of the rotor iron core 12, the centralization flow channel is connected to the fifth flow channel 18, a third through hole 193 disposed in an axial direction of the first shaft sleeve 19 is cut in the second groove 192, and the centralization flow channel is connected to the second inlet end 161 by using the third through hole 193. The cooling medium in the fifth flow channel 18 may flow into the centralization flow channel, then flow into the second inlet end 161 through the third through hole 193, and then flow into the second axial flow channel 162 to dissipate heat of the rotor winding 13.

As shown in FIG. 20, the rotor 100 further includes an end plate 101 and an excitation module 102, the end plate 101 is located on one side of the rotor iron core 12, the end plate 101 is adjacent to the second inlet end 161, in other words, the end plate 101 is located on an end close to the first through hole 111, and the excitation module 102 is disposed on the end plate 101. As shown in FIG. 9 and FIG. 20, the end plate 101 has a plurality of third grooves 114, and the plurality of third grooves 114 are distributed in the circumferential direction of the rotor iron core 12.

As shown in FIG. 20 and FIG. 22, the second inlet end 161 includes a second radial flow channel 161a distributed in a radial direction of the rotor iron core 12, the fifth flow channel 18 is connected to the second radial flow channel 161a, the second radial flow channel 161a is connected to the second axial flow channel 162, the third groove 114 on the end plate 101 covers a part of the second radial flow channel 161a, and a backflow channel may be formed by a part of overlapping between the third groove 114 and the second radial flow channel 161a. In this way, a cooling medium that enters the second radial flow channel 161a can enter and is filled in the third groove 114 on the end plate 101 through the backflow channel, to dissipate heat of the excitation module 102 disposed on the end plate 101, so that a heat dissipation effect of the excitation module 102 is improved, and a heat dissipation problem of the excitation module 102 is resolved.

The third groove 114 may partially cover the second radial flow channel 161a, or the third groove 114 may fully cover the second radial flow channel 161a.

As shown in FIG. 9 and FIG. 20, the end plate 101 further has a plurality of fourth grooves 113, the fourth groove 113 has an outlet end, an outlet flow channel is formed by the fourth groove 113 and an end of the rotor iron core 12, the outlet flow channel is connected to the first outlet end 153, the outlet flow channel has an outlet, and the cooling medium in the second flow channel 15 may flow into the outlet flow channel through the first outlet end 153 after flowing through the first axial flow channel 152, and flow out of the rotor 100 from the outlet of the outlet flow channel.

In this embodiment of this application, structures of the fourth flow channel 17 and the fifth flow channel 18 may be the same, an inlet end and outlet end of the fourth flow channel 17 are opposite to those of the fifth flow channel 18, the inlet end of the fourth flow channel 17 is adjacent to the first through hole 111, and the inlet end of the fifth flow channel 18 is adjacent to the second through hole 112.

In this embodiment of this application, as shown in FIG. 20, the cooling medium first enters the first flow channel 14. One part of the cooling medium may enter the fourth flow channel 17 through the first through hole 111. The cooling medium in the fourth flow channel 17 exchanges heat with the rotor iron core 12 and the rotor winding 13 to dissipate heat, then enters the first radial flow channel 151b, and then flows into the first axial flow channel 152. The cooling medium in the first axial flow channel 152 exchanges heat with the rotor winding 13 to dissipate heat of the rotor winding 13, and then flows out through the first outlet end 153 and enters the outlet flow channel. The cooling medium flows through the outlet flow channel, and flows out from the outlet of the outlet flow channel, and is swung to an end of the stator winding under action of a centrifugal force.

The other part of the cooling medium may enter the fifth flow channel 18 through the second through hole 112. The cooling medium in the fifth flow channel 18 exchanges heat with the rotor iron core 12 and the rotor winding 13 to dissipate heat, then enters the centralization flow channel, flows into the second inlet end 161 of the third flow channel 16 through the third through hole 193, in other words, flows into the second radial flow channel 161a, is filled in the third groove 114, and then flows into the second axial flow channel 162. The cooling medium in the second axial flow channel 162 exchanges heat with the rotor winding 13 to dissipate heat of the rotor winding 13, then flows out of the rotor 100 through the second outlet end 163, and is swung to an end of the stator winding under action of a centrifugal force. The cooling medium flowing through the third groove 114 and the outlet flow channel may exchange heat with the excitation module 102 on the end plate 101 to dissipate heat of the excitation module 102.

An embodiment of this application further provides a motor. The motor may be applied to an electric vehicle (Electric Vehicle, EV for short), a pure electric vehicle (Pure Electric Vehicle/Battery Electric Vehicle, PEV/BEV for short), a hybrid electric vehicle (Hybrid Electric Vehicle, HEV for short), a range extended electric vehicle (Range Extended Electric Vehicle, REEV for short), a plug-in hybrid electric vehicle (Plug-in Hybrid Electric Vehicle, PHEV for short), a new energy vehicle (New Energy Vehicle), battery management (Battery Management), a motor
and a driver (Motor & Driver), power converter (Power Converter), a reducer (Reducer), and the like.

The motor includes at least a stator and any one of the foregoing rotors 100. The stator is sleeved on outer circumference of the rotor 100. The stator includes a stator iron core and a stator winding wound around the stator iron core. A first outlet end of the rotor 100 is adjacent to one end of the stator winding, so that a cooling medium flowing out from the first outlet end is swung to an end of the stator winding under action of a centrifugal force to dissipate heat of the stator winding.

In addition, an outlet of an outlet flow channel, a second outlet end, and an outlet of a sixth flow channel may all be disposed adjacent to one end of the stator winding, so that the cooling medium can be swung to the end of the stator winding under centrifugal action to dissipate heat of the stator winding.

The motor includes any one of the foregoing rotors 100. The rotor iron core of the rotor 100 has a first axial flow channel disposed in a gap between two adjacent rotor windings. Heat dissipation of the rotor winding is implemented by using the first axial flow channel relatively close to the rotor winding, so that a heat dissipation effect of the rotor winding is improved, the rotor 100 has a relatively high heat dissipation effect, and an overall heat dissipation effect of the motor is further improved.

The motor may further include a flow distribution apparatus, and the flow distribution apparatus is configured to spray the cooling medium onto both ends of the stator winding. Specifically, a first flow channel may be connected to a liquid supply pipe. The cooling medium flows into the first flow channel through the liquid supply pipe. The flow distribution apparatus may be disposed at inlets of the liquid supply pipe and the first flow channel, to ensure an amount of cooling medium flowing to an end of the stator winding and ensure a heat dissipation effect of the stator winding.

An embodiment of this application further provides a powertrain. The powertrain may be applied to an electric vehicle (EV), a pure electric vehicle (PEV/BEV), a hybrid electric vehicle (HEV), a range extended electric vehicle (REEV), a plug-in hybrid electric vehicle (PHEV), a new energy vehicle (New Energy Vehicle), and the like, or may be applied to battery management (Battery Management) or devices such as a motor and a driver (Motor & Driver) and power converter (Power Converter).

The powertrain includes at least the foregoing motor. The powertrain may further include a reducer, the motor may be connected to the reducer by using a rotation shaft, and a liquid supply pipe may be disposed in the reducer.

The powertrain provided in this embodiment of this application includes the foregoing motor. The motor implements heat dissipation of a rotor winding by disposing a first axial flow channel relatively close to the rotor winding. A heat dissipation effect of the rotor winding is improved, the motor has a relatively high heat dissipation effect, a heat dissipation effect of a powertrain system is further improved, and heat in the powertrain can be effectively dissipated in a timely manner.

An embodiment of this application further provides a vehicle. The vehicle may be an electric vehicle (EV), a pure electric vehicle (PEV/BEV), a hybrid electric vehicle (HEV), a range extended electric vehicle (REEV), a plug-in hybrid electric vehicle (PHEV), a new energy vehicle (New Energy Vehicle), or the like.

The vehicle includes at least the foregoing motor. The vehicle may further include a wheel and a drive component. The motor is connected to the wheel by using the drive component. Specifically, a rotation shaft of the motor rotates to output power, and the drive component transfer the power to the wheel, so that the wheel rotates.

The vehicle provided in this embodiment of this application includes the foregoing motor. The motor implements heat dissipation of a rotor winding by disposing a first axial flow channel relatively close to the rotor winding. A heat dissipation effect of the rotor winding is improved, and the motor has a relatively high heat dissipation effect. This increases movement efficiency of the vehicle and extends a service life of the vehicle.

In the description of the embodiments of this application, it should be noted that, unless otherwise specified and limited, the terms "install", "connect to each other", and "connect" should be understood in a broad sense. For example, the term may be a fixed connection, may be an indirect connection by using an intermediate medium, or may be a connection inside two elements or an interaction relationship between two elements. Persons of ordinary skill in the art can understand specific meanings of the foregoing terms in the embodiments of this application based on a specific case.

In the specification, claims, and accompanying drawings of the embodiments of this application, the terms "first", "second", "third", "fourth", and the like (if existent) are intended to distinguish between similar objects but do not necessarily indicate a specific sequence.

Finally, it should be noted that the foregoing embodiments are merely intended for describing the technical solutions of the embodiments of this application other than limiting the embodiments of this application. Although the embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of this application.

## Claims

1. A rotor (100), comprising a rotation shaft (11), a rotor iron core (12), and a plurality of rotor windings (13), wherein the rotor iron core (12) is sleeved on the rotation shaft (11), the rotor winding (13) is wound around the rotor iron core (12), and the plurality of rotor windings (13) are spaced apart in a circumferential direction of the rotor iron core (12);
the rotation shaft (11) has a first flow channel (14) distributed in an axial direction, the rotation shaft (11) further has a first through hole (111), and the first through hole is connected to the first flow channel (14); and
the rotor iron core has a second flow channel (15), both ends of the second flow channel (15) extend to both ends of the rotor iron core (12), the second flow channel (15) comprises a first inlet end (151), a first axial flow channel (152), and a first outlet end (153) that are connected to each other, the first inlet end (151) is connected to the first through hole (111), and the first axial flow channel (152) is located between two adjacent rotor windings (13);
wherein the rotor (100) further comprises an end plate (101) and an excitation module (102), wherein the end plate is located on one side of the rotor iron core, the end plate is adjacent to the first inlet end, and the excitation module is disposed on the end plate; and
the end plate has a plurality of third grooves (114), the plurality of third grooves are distributed in the circumferential direction of the rotor iron core (12), the first inlet end (151) comprises a first radial flow channel (151b) distributed in a radial direction of the rotor iron core (12), the first radial flow channel (151b) is connected to the first axial flow channel (152), and the third groove (114) covers a part of the first radial flow channel (151b).

2. The rotor according to claim 1, wherein the rotation shaft further has a second through hole (112), the first through hole is adjacent to one end of the rotor iron core, the second through hole is adjacent to the other end of the rotor iron core, and the second through hole is connected to the first flow channel; and
the rotor iron core further has a third flow channel (16), both ends of the third flow channel extend to both ends of the rotor iron core, the third flow channel comprises a second inlet end (161), a second axial flow channel (161a), and a second outlet end (163) that are connected to each other, the second inlet end is connected to the second through hole, and the second axial flow channel is located between two adjacent rotor windings.

3. The rotor according to claim 1, wherein the rotation shaft further has a second through hole (112), the first through hole is adjacent to one end of the rotor iron core, the second through hole is adjacent to the other end of the rotor iron core, and the second through hole is connected to the first flow channel; and
the rotor iron core further has a fourth flow channel (17) distributed in the axial direction, the fourth flow channel is located between the rotor winding and the rotation shaft, and the fourth flow channel is connected to the second through hole.

4. The rotor according to claim 1, wherein the rotor iron core further has a fourth flow channel (17) distributed in the axial direction, and the fourth flow channel is located between the rotor winding and the rotation shaft; and
one end of the fourth flow channel is connected to the first through hole, and the other end of the fourth flow channel is connected to the first inlet end.

5. The rotor according to claim 2, wherein the rotor iron core further has a fourth flow channel (17) and a fifth flow channel (18) distributed in the axial direction, and the fourth flow channel and the fifth flow channel are separately located between the rotor winding and the rotation shaft;
one end of the fourth flow channel is connected to the first through hole, and the other end of the fourth flow channel is connected to the first inlet end; and
one end of the fifth flow channel is connected to the second through hole, and the other end of the fifth flow channel is connected to the second inlet end.

6. The rotor according to any one of claims 1 to 5,
the end plate further has a plurality of fourth grooves (113) connected to the third grooves, an outlet flow channel is formed by the fourth groove and an end of the rotor iron core, and the outlet flow channel has an outlet.

7. The rotor according to claim 6, wherein an outlet flow channel is formed by the fourth groove (113) and an end of the rotor iron core, the outlet flow channel is connected to the second outlet end (163), and the outlet flow channel has an outlet.

8. The rotor according to claim 4, further comprising a first shaft sleeve (19) sleeved on the rotation shaft, wherein the first shaft sleeve is located on one side of the rotor iron core, and the first shaft sleeve is adjacent to an outlet end of the fourth flow channel; and
the first shaft sleeve has a second groove (192), the second groove is distributed in a circumferential direction of the first shaft sleeve, a third through hole disposed in an axial direction of the first shaft sleeve is cut in the second groove, a centralization flow channel is formed by the second groove and an end of the rotor iron core, the centralization flow channel is connected to the fourth flow channel, and the centralization flow channel is connected to the first inlet end by using the third through hole.

9. The rotor according to claim 4,
wherein the end plate has a plurality of fourth grooves (113), an outlet flow channel is formed by the fourth groove and an end of the rotor iron core, the outlet flow channel is connected to the first outlet end, and the outlet flow channel has an outlet.

10. The rotor according to any one of claim 7, 8, 9, wherein the fourth groove (113) comprises a plurality of connected arc-shaped grooves, the plurality of arc-shaped grooves are disposed in the radial direction of the rotor iron core, and there are protrusions on walls of some arc-shaped grooves toward the inside or the outside of the grooves.

11. The rotor according to any one of claims 1 to 10, wherein a radial spacing of the first outlet end (153) is less than a radial spacing of the first axial flow channel (152).

12. A motor, comprising at least a stator and the rotor according to any one of claims 1 to 11, wherein the stator is sleeved on outer circumference of the rotor, the stator comprises a stator iron core and a stator winding wound around the stator iron core, and a first outlet end of the rotor is adjacent to one end of the stator winding.

13. A powertrain, comprising at least the motor according to claim 12.

14. A vehicle, comprising at least the motor according to claim 12.

## Patentansprüche

1. Rotor (100), umfassend eine Drehwelle (11), einen Rotoreisenkern (12) und eine Vielzahl von Rotorwicklungen (13), wobei der Rotoreisenkern (12) auf die Drehwelle (11) aufgezogen ist, die Rotorwicklung (13) um den Rotoreisenkern (12) gewickelt ist und die Vielzahl von Rotorwicklungen (13) in einer Umfangsrichtung des Rotoreisenkerns (12) beabstandet ist;
die Drehwelle (11) einen ersten Strömungskanal (14) aufweist, der in einer axialen Richtung verteilt ist, die Drehwelle (11) ferner ein erstes Durchgangsloch (111) aufweist und das erste Durchgangsloch mit dem ersten Strömungskanal (14) verbunden ist; und
der Rotoreisenkern einen zweiten Strömungskanal (15) aufweist, sich beide Enden des zweiten Strömungskanals (15) zu beiden Enden des Rotoreisenkerns (12) erstrecken, der zweite Strömungskanal (15) ein erstes Einlassende (151), einen ersten axialen Strömungskanal (152) und ein erstes Auslassende (153) umfasst, die miteinander verbunden sind, das erste Einlassende (151) mit dem ersten Durchgangsloch (111) verbunden ist und sich der erste axiale Strömungskanal (152) zwischen zwei benachbarten Rotorwicklungen (13) befindet;
wobei der Rotor (100) ferner eine Endplatte (101) und ein Erregungsmodul (102) umfasst, wobei sich die Endplatte auf einer Seite des Rotoreisenkerns befindet, die Endplatte zu dem ersten Einlassende benachbart ist und das Erregungsmodul an der Endplatte angeordnet ist; und
die Endplatte eine Vielzahl von dritten Nuten (114) aufweist, die Vielzahl von dritten Nuten in der Umfangsrichtung des Rotoreisenkerns (12) verteilt ist, das erste Einlassende (151) einen ersten radialen Strömungskanal (151b) umfasst, der in einer radialen Richtung des Rotoreisenkerns (12) verteilt ist, der erste radiale Strömungskanal (151b) mit dem ersten axialen Strömungskanal (152) verbunden ist und die dritte Nut (114) einen Teil des ersten radialen Strömungskanals (151b) bedeckt.

2. Rotor nach Anspruch 1, wobei die Drehwelle ferner ein zweites Durchgangsloch (112) aufweist, das erste Durchgangsloch zu einem Ende des Rotoreisenkerns benachbart ist, das zweite Durchgangsloch zu dem anderen Ende des Rotoreisenkerns benachbart ist und das zweite Durchgangsloch mit dem ersten Strömungskanal verbunden ist; und
der Rotoreisenkern ferner einen dritten Strömungskanal (16) aufweist, sich beide Enden des dritten Strömungskanals zu beiden Enden des Rotoreisenkerns erstrecken, der dritte Strömungskanal ein zweites Einlassende (161), einen zweiten axialen Strömungskanal (161a) und ein zweites Auslassende (163) umfasst, die miteinander verbunden sind, das zweite Einlassende mit dem zweiten Durchgangsloch verbunden ist und sich der zweite axiale Strömungskanal zwischen zwei benachbarten Rotorwicklungen befindet.

3. Rotor nach Anspruch 1, wobei die Drehwelle ferner ein zweites Durchgangsloch (112) aufweist, das erste Durchgangsloch zu einem Ende des Rotoreisenkerns benachbart ist, das zweite Durchgangsloch zu dem anderen Ende des Rotoreisenkerns benachbart ist und das zweite Durchgangsloch mit dem ersten Strömungskanal verbunden ist; und
der Rotoreisenkern ferner einen vierten Strömungskanal (17) aufweist, der in der axialen Richtung verteilt ist, sich der vierte Strömungskanal zwischen der Rotorwicklung und der Drehwelle befindet und der vierte Strömungskanal mit dem zweiten Durchgangsloch verbunden ist.

4. Rotor nach Anspruch 1, wobei der Rotoreisenkern ferner einen vierten Strömungskanal (17) aufweist, der in der axialen Richtung verteilt ist, und sich der vierte Strömungskanal zwischen der Rotorwicklung und der Drehwelle befindet; und
ein Ende des vierten Strömungskanals mit dem ersten Durchgangsloch verbunden ist und das andere Ende des vierten Strömungskanals mit dem ersten Einlassende verbunden ist.

5. Rotor nach Anspruch 2, wobei der Rotoreisenkern ferner einen vierten Strömungskanal (17) und einen fünften Strömungskanal (18) aufweist, die in der axialen Richtung verteilt sind, und sich der vierte Strömungskanal und der fünfte Strömungskanal getrennt zwischen der Rotorwicklung und der Drehwelle befinden;
ein Ende des vierten Strömungskanals mit dem ersten Durchgangsloch verbunden ist und das andere Ende des vierten Strömungskanals mit dem ersten Einlassende verbunden ist; und
ein Ende des fünften Strömungskanals mit dem zweiten Durchgangsloch verbunden ist und das andere Ende des fünften Strömungskanals mit dem zweiten Einlassende verbunden ist.

6. Rotor nach einem der Ansprüche 1 bis 5,
wobei die Endplatte ferner eine Vielzahl von vierten Nuten (113) aufweist, die mit den dritten Nuten verbunden ist, ein Auslassströmungskanal durch die vierte Nut und ein Ende des Rotoreisenkerns gebildet ist und der Auslassströmungskanal einen Auslass aufweist.

7. Rotor nach Anspruch 6, wobei ein Auslassströmungskanal durch die vierte Nut (113) und ein Ende des Rotoreisenkerns gebildet ist, der Auslassströmungskanal mit dem zweiten Auslassende (163) verbunden ist und der Auslassströmungskanal einen Auslass aufweist.

8. Rotor nach Anspruch 4, ferner umfassend eine erste Wellenhülse (19), die auf die Drehwelle aufgezogen ist, wobei sich die erste Wellenhülse auf einer Seite des Rotoreisenkerns befindet und die erste Wellenhülse zu einem Auslassende des vierten Strömungskanals benachbart ist; und
die erste Wellenhülse eine zweite Nut (192) aufweist, die zweite Nut in einer Umfangsrichtung der ersten Wellenhülse verteilt ist, ein drittes Durchgangsloch, das in einer axialen Richtung der ersten Wellenhülse angeordnet ist, in die zweite Nut eingeschnitten ist, ein Zentralisierungsströmungskanal durch die zweite Nut und ein Ende des Rotoreisenkerns gebildet ist, der Zentralisierungsströmungskanal mit dem vierten Strömungskanal verbunden ist und der Zentralisierungsströmungskanal mit dem ersten Einlassende unter Verwendung des dritten Durchgangslochs verbunden ist.

9. Rotor nach Anspruch 4,
wobei die Endplatte eine Vielzahl von vierten Nuten (113) aufweist, ein Auslassströmungskanal durch die vierte Nut und ein Ende des Rotoreisenkerns gebildet ist, der Auslassströmungskanal mit dem ersten Auslassende verbunden ist und der Auslassströmungskanal einen Auslass aufweist.

10. Rotor nach einem der Ansprüche 7, 8, 9, wobei die vierte Nut (113) eine Vielzahl von verbundenen bogenförmigen Nuten umfasst, die Vielzahl von bogenförmigen Nuten in der radialen Richtung des Rotoreisenkerns angeordnet ist und Vorsprünge an Wänden einiger bogenförmiger Nuten zur Innenseite oder zur Außenseite der Nuten hin vorhanden sind.

11. Rotor nach einem der Ansprüche 1 bis 10, wobei ein radialer Abstand des ersten Auslassendes (153) kleiner ist als ein radialer Abstand des ersten axialen Strömungskanals (152).

12. Motor, umfassend mindestens einen Stator und den Rotor nach einem der Ansprüche 1 bis 11, wobei der Stator auf einen Außenumfang des Rotors aufgezogen ist, der Stator einen Statoreisenkern und eine um den Statoreisenkern gewickelte Statorwicklung umfasst und ein erstes Auslassende des Rotors zu einem Ende der Statorwicklung benachbart ist.

13. Antriebsstrang, umfassend mindestens den Motor nach Anspruch 12.

14. Fahrzeug, umfassend mindestens den Motor nach Anspruch 12.

## Revendications

1. Rotor (100), comprenant un arbre de rotation (11), un noyau de fer de rotor (12) et une pluralité d'enroulements de rotor (13), dans lequel le noyau de fer de rotor (12) est emmanché sur l'arbre de rotation (11), l'enroulement de rotor (13) est enroulé autour du noyau de fer de rotor (12), et la pluralité d'enroulements de rotor (13) sont espacés dans une direction circonférentielle du noyau de fer de rotor (12) ;
l'arbre de rotation (11) a un premier canal d'écoulement (14) réparti dans une direction axiale, l'arbre de rotation (11) a en outre un premier trou traversant (111), et le premier trou traversant est relié au premier canal d'écoulement (14) ; et le noyau de fer de rotor a un deuxième canal d'écoulement (15), les deux extrémités du deuxième canal d'écoulement (15) s'étendent jusqu'aux deux extrémités du noyau de fer de rotor (12), le deuxième canal d'écoulement (15) comprend une première extrémité d'entrée (151), un premier canal d'écoulement axial (152) et une première extrémité de sortie (153) qui sont reliés entre eux, la première extrémité d'entrée (151) est reliée au premier trou traversant (111), et le premier canal d'écoulement axial (152) est situé entre deux enroulements de rotor adjacents (13) ;
dans lequel le rotor (100) comprend en outre une plaque d'extrémité (101) et un module d'excitation (102), dans lequel la plaque d'extrémité est située sur un côté du noyau de fer de rotor, la plaque d'extrémité est adjacente à la première extrémité d'entrée, et le module d'excitation est disposé sur la plaque d'extrémité ; et
la plaque d'extrémité a une pluralité de troisièmes rainures (114), la pluralité de troisièmes rainures sont réparties dans la direction circonférentielle du noyau de fer de rotor (12), la première extrémité d'entrée (151) comprend un premier canal d'écoulement radial (151b) réparti dans une direction radiale du noyau de fer de rotor (12), le premier canal d'écoulement radial (151b) est relié au premier canal d'écoulement axial (152), et la troisième rainure (114) couvre une partie du premier canal d'écoulement radial (151b).

2. Rotor selon la revendication 1, dans lequel l'arbre de rotation a en outre un deuxième trou traversant (112), le premier trou traversant est adjacent à une extrémité du noyau de fer de rotor, le deuxième trou traversant est adjacent à l'autre extrémité du noyau de fer de rotor, et le deuxième trou traversant est relié au premier canal d'écoulement ; et
le noyau de fer de rotor a en outre un troisième canal d'écoulement (16), les deux extrémités du troisième canal d'écoulement s'étendent jusqu'aux deux extrémités du noyau de fer de rotor, le troisième canal d'écoulement comprend une seconde extrémité d'entrée (161), un deuxième canal d'écoulement axial (161a) et une seconde extrémité de sortie (163) qui sont reliés entre eux, la seconde extrémité d'entrée est reliée au deuxième trou traversant, et le deuxième canal d'écoulement axial est situé entre deux enroulements de rotor adjacents.

3. Rotor selon la revendication 1, dans lequel l'arbre de rotation a en outre un deuxième trou traversant (112), le premier trou traversant est adjacent à une extrémité du noyau de fer de rotor, le deuxième trou traversant est adjacent à l'autre extrémité du noyau de fer de rotor, et le deuxième trou traversant est relié au premier canal d'écoulement ; et
le noyau de fer de rotor a en outre un quatrième canal d'écoulement (17) réparti dans la direction axiale, le quatrième canal d'écoulement est situé entre l'enroulement de rotor et l'arbre de rotation, et le quatrième canal d'écoulement est relié au deuxième trou traversant.

4. Rotor selon la revendication 1, dans lequel le noyau de fer de rotor a en outre un quatrième canal d'écoulement (17) réparti dans la direction axiale, et le quatrième canal d'écoulement est situé entre l'enroulement de rotor et l'arbre de rotation ; et une extrémité du quatrième canal d'écoulement est reliée au premier trou traversant, et l'autre extrémité du quatrième canal d'écoulement est reliée à la première extrémité d'entrée.

5. Rotor selon la revendication 2, dans lequel le noyau de fer de rotor a en outre un quatrième canal d'écoulement (17) et un cinquième canal d'écoulement (18) répartis dans la direction axiale, et le quatrième canal d'écoulement et le cinquième canal d'écoulement sont situés séparément entre l'enroulement de rotor et l'arbre de rotation ;
une extrémité du quatrième canal d'écoulement est reliée au premier trou traversant, et l'autre extrémité du quatrième canal d'écoulement est reliée à la première extrémité d'entrée ; et
une extrémité du cinquième canal d'écoulement est reliée au deuxième trou traversant, et l'autre extrémité du cinquième canal d'écoulement est reliée à la seconde extrémité d'entrée.

6. Rotor selon l'une quelconque des revendications 1 à 5,
la plaque d'extrémité a en outre une pluralité de quatrièmes rainures (113) reliées aux troisièmes rainures, un canal d'écoulement de sortie est formé par la quatrième rainure et une extrémité du noyau de fer de rotor, et le canal d'écoulement de sortie a une sortie.

7. Rotor selon la revendication 6, dans lequel un canal d'écoulement de sortie est formé par la quatrième rainure (113) et une extrémité du noyau de fer de rotor, le canal d'écoulement de sortie est relié à la seconde extrémité de sortie (163), et le canal d'écoulement de sortie a une sortie.

8. Rotor selon la revendication 4, comprenant en outre un premier manchon d'arbre (19) emmanché sur l'arbre de rotation, dans lequel le premier manchon d'arbre est situé sur un côté du noyau de fer de rotor, et le premier manchon d'arbre est adjacent à une extrémité de sortie du quatrième canal d'écoulement ; et le premier manchon d'arbre a une deuxième rainure (192), la deuxième rainure est répartie dans une direction circonférentielle du premier manchon d'arbre, un troisième trou traversant disposé dans une direction axiale du premier manchon d'arbre est découpé dans la deuxième rainure, un canal d'écoulement de centralisation est formé par la deuxième rainure et une extrémité du noyau de fer de rotor, le canal d'écoulement de centralisation est relié au quatrième canal d'écoulement, et le canal d'écoulement de centralisation est relié à la première extrémité d'entrée au moyen du troisième trou traversant.

9. Rotor selon la revendication 4,
dans lequel la plaque d'extrémité a une pluralité de quatrièmes rainures (113), un canal d'écoulement de sortie est formé par la quatrième rainure et une extrémité du noyau de fer de rotor, le canal d'écoulement de sortie est relié à la première extrémité de sortie, et le canal d'écoulement de sortie a une sortie.

10. Rotor selon l'une quelconque des revendications 7, 8, 9, dans lequel la quatrième rainure (113) comprend une pluralité de rainures en forme d'arc reliées, la pluralité de rainures en forme d'arc sont disposées dans la direction radiale du noyau de fer de rotor, et il existe des protubérances sur les parois de certaines rainures en forme d'arc vers l'intérieur ou l'extérieur des rainures.

11. Rotor selon l'une quelconque des revendications 1 à 10, dans lequel un espacement radial de la première extrémité de sortie (153) est inférieur à un espacement radial du premier canal d'écoulement axial (152).

12. Moteur, comprenant au moins un stator et le rotor selon l'une quelconque des revendications 1 à 11, dans lequel le stator est emmanché sur la circonférence externe du rotor, le stator comprend un noyau de fer de stator et un enroulement de stator enroulé autour du noyau de fer de stator, et une première extrémité de sortie du rotor est adjacente à une extrémité de l'enroulement de stator.

13. Groupe motopropulseur, comprenant au moins le moteur selon la revendication 12.

14. Véhicule, comprenant au moins le moteur selon la revendication 12.
